(19) Europäisches Patentamt
European Patent Office
Office européen des brevets

(11) **EP 3 782 310 B1**

(12) **EUROPÄISCHE PATENTSCHRIFT**

(45) Veröffentlichungstag und Bekanntmachung des Hinweises auf die Patenterteilung:
**31.05.2023 Patentblatt 2023/22**

(21) Anmeldenummer: **19720492.8**

(22) Anmeldetag: **17.04.2019**

(51) Internationale Patentklassifikation (IPC):
**H04L 1/00** (2006.01)  **H04J 1/00** (2006.01)
**H04B 1/713** (2011.01)  **H04B 1/00** (2006.01)

(52) Gemeinsame Patentklassifikation (CPC):
**H04L 1/0047; H04B 1/0021; H04B 1/713; H04L 1/0052**

(86) Internationale Anmeldenummer:
**PCT/EP2019/059941**

(87) Internationale Veröffentlichungsnummer:
**WO 2019/202002 (24.10.2019 Gazette 2019/43)**

(54) **PAKET-DETEKTOR/DECODER FÜR EIN FUNKÜBERTRAGUNGSSYSTEM MIT ÜBERTRAGUNG ÜBER MEHRERE FREQUENZKANÄLE**

PACKET DETECTOR/DECODER FOR A RADIO TRANSMISSION SYSTEM WITH TRANSMISSION OVER A PLURALITY OF FREQUENCY CHANNELS

DÉTECTEUR-DÉCODEUR DE PAQUETS POUR UN SYSTÈME DE TRANSMISSION RADIO AVEC TRANSMISSION SUR PLUSIEURS CANAUX DE FREQUENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2018 DE 102018206159**

(43) Veröffentlichungstag der Anmeldung:
**24.02.2021 Patentblatt 2021/08**

(73) Patentinhaber: **Fraunhofer-Gesellschaft zur Förderung
der angewandten Forschung e.V.
80686 München (DE)**

(72) Erfinder:
• **KILIAN, Gerd**
  **91058 Erlangen (DE)**
• **KNEISSL, Jakob**
  **91058 Erlangen (DE)**
• **GAMM, Eberhard**
  **91320 Ebermannstadt (DE)**
• **BERNHARD, Josef**
  **91058 Erlangen (DE)**
• **KOCH, Robert**
  **91058 Erlangen (DE)**
• **KOHLMANN, Martin**
  **91058 Erlangen (DE)**

(74) Vertreter: **Schlenker, Julian et al
Schoppe, Zimmermann, Stöckeler
Zinkler, Schenk & Partner mbB
Patentanwälte
Radlkoferstraße 2
81373 München (DE)**

(56) Entgegenhaltungen:
**US-A- 5 588 028   US-A1- 2004 213 327
US-A1- 2006 245 452   US-A1- 2007 211 785
US-A1- 2012 254 703**

• **FRED HARRIS ET AL: "Polyphase analysis filter bank downconverts unequal channel bandwidths with arbitrary center frequencies", ANALOG INTEGRATED CIRCUITS AND SIGNAL PROCESSING, KLUWER ACADEMIC PUBLISHERS, BO, Bd. 71, Nr. 3, 22. September 2011 (2011-09-22), Seiten 481-494, XP035053645, ISSN: 1573-1979, DOI: 10.1007/S10470-011-9746-Y**

- Fredric Harris ET AL: "An Efficient Full Digital Frequency Hopping Demodulator Based on Polyphase Filter Banks", SDR11-WInnComm, 29. November 2011 (2011-11-29), Seiten 1-5, XP055625239, Gefunden im Internet: URL:https://www.wirelessinnovation.org/ass ets/Proceedings/2011/2011-6a-harris%20chen .p df [gefunden am 2019-09-23]

**Beschreibung**

Ausführungsbeispiele beziehen sich auf einen Datenempfänger und, im speziellen, auf einen Datenempfänger zum Empfangen eines Breitbandsignals, das mehrere Teil-Datenpakete aufweist, die entsprechend eines Zeitfrequenzsprungmusters in der Zeit und Frequenz verteilt sind. Manche Ausführungsbeispiele beziehen sich auf einen Paket-Detektor/Decoder für ein Funkübertragungssystem.

Aus der DE 10 2011 082 098 B4 ist ein Telegram-Splitting basiertes Funkübertragungssystem bekannt, bei dem ein zu übertragendes Datenpaket (oder Telegramm) auf eine Mehrzahl von Teil-Datenpaketen aufgeteilt wird, wobei die Mehrzahl von Teil-Datenpaketen jeweils kürzer sind als das Datenpaket, und wobei die Mehrzahl von Teil-Datenpaketen entsprechend eines Zeitfrequenzsprungmusters in der Zeit und Frequenz verteilt übertragen werden.

Bei der gleichzeitigen bzw. zeitlich überlappenden Aussendung einer Vielzahl von in Teil-Datenpaketen aufgeteilten Datenpaketen durch eine Vielzahl von Datensendern, steigt die im Datenempfänger erforderliche Rechenleistung zur Detektion und Decodierung der Teil-Datenpakete erheblich.

Die US 2004/213327 A1 bezieht sich auf einen DFHSS Empfänger (DFHSS = Digital Frequency Hopping Spread Spectrum). Der DFHSS Empfänger umfasst einen Frequenzdetektor und einen oder mehrere sog. Soft-Decision Decoder, wobei der Frequenzdetektor zumindest eine Frequenz eines empfangenen Signals bestimmt, wobei der Soft-Decision Decoder ein sog. Trellis-Modell unter Verwendung der detektierten Frequenz als Knoten des Trellis-Modells erstellt.

Die US 2007/0211785 A1) bezieht sich auf die Detektion und Synchronisierung von Paketen, die entsprechend eines Frequenzsprungverfahrens übertragen werden. Hierbei wird der zur Übertragung verwendete Zeit-Frequenz-Code (TFC) ermittelt, bevor anschließend die Kanalschätzung und Decodierung erfolgt.

In der Veröffentlichung [FRED HARRIS ET AL: 11 Polyphase analysis filter bank downconverts unequal channel bandwidths with arbitrary center frequencies 11, ANALOG INTEGRATED CIRCUITS AND SIGNAL PROCESSING, KLUWER ACADEMIC PUBLISHERS, BO, Bd. 71, Nr. 3, 22. September 2011 (2011-09-22), Seiten 481-494, XP035053645, ISSN: 1573-1979, DOI: 10.1007/SI0470-0II-9746-Y] wird eine polyphasen Filterbank beschrieben.

In der Veröffentlichung [Fredric Harris ET AL: 11 An Efficient Full Digital Frequency Hopping Demodulator Based on Polyphase Filter Banks 11 , SDRII-WinnComm, 29. November 2011 (2011-11-29), Seiten 1-5, XP055625239, Gefunden im Internet: URL: https://www.wirelessinnovation.org/assets/Proceedings/2011/2011-6a-harris%20chen.pdf] wird ein FHSS Demodulator beschrieben, der zwei Komponenten aufweist: Einen sog. De-Hopping Channelizer und einen sog. PFSK Demodulation Channelizer. Mittels des De-Hopping Channelizers werden die angewendeten Zeit-Frequenz-Sprünge basierend auf einer PN Sequenz (PN = pseudo-random noise) rückgängig gemacht, um ein sprungfreies FSK Signal zu erhalten, dass dem PFSK Demodulation Channelizer bereitgestellt wird.

Der vorliegenden Erfindung liegt die Aufgabe zugrunde, die im Datenempfänger erforderliche Rechenleistung für die Detektion und Decodierung von Teil-Datenpaketen zu reduzieren. Diese Aufgabe wird durch die unabhängigen Patentansprüche gelöst.

Vorteilhafte Weiterbildungen finden sich in den abhängigen Patentansprüchen.

Ausführungsbeispiele der vorliegenden Erfindung werden bezugnehmend auf die beiliegenden Figuren näher beschrieben. Es zeigen:

Fig. 1     ein schematisches Blockschaltbild eines Systems mit einem Datensender und einem Datenempfänger, gemäß einem Ausführungsbeispiel der vorliegenden Erfindung;

Fig. 2     in einem Diagramm eine Belegung des Übertragungskanals bei der Übertragung einer Mehrzahl von Teil-Datenpaketen entsprechend einem Zeitfrequenzsprungmuster;

Fig. 3     ein schematisches Blockschaltbild eines Datenempfängers, gemäß einem Ausführungsbeispiel der vorliegenden Erfindung;

Fig. 4     in einem Diagramm eine Belegung des Übertragungskanals bei der Übertragung von Datenpaketen unter Verwendung von vier unterschiedlichen Übertragungsverfahren;

Fig. 5     ein schematisches Blockschalbild eines einkanaligen Detektors eines Datenempfängers, gemäß einem Ausführungsbeispiel;

Fig. 6     ein schematisches Blockschaltbild eines Vielkanal-Detektors eines Datenempfängers, gemäß einem Ausführungsbeispiel;

Fig. 7     ein schematisches Blockschalbild eines Vielkanal-Detektors eines Datenempfängers, gemäß einem Ausführungsbeispiel;

Fig. 8    ein schematisches Blockschalbild eines Signal-Ringspeichers eines Datenempfängers, gemäß einem Ausführungsbeispiel;

Fig. 9    ein schematisches Blockschaltbild eines Decoders eines Datenempfängers, gemäß einem Ausführungsbeispiel;

Fig. 10    ein schematisches Blockschaltbild eines Datenempfängers, gemäß einem Ausführungsbeispiel;

Fig. 11    ein schematisches Blockschaltbild eines Datenempfängers, gemäß einem weiteren Ausführungsbeispiel;

Fig. 12    ein schematisches Blockschaltbild eines Datenempfängers, gemäß einem weiteren Ausführungsbeispiel;

Fig. 13    ein schematisches Blockschaltbild einer Filterbank eines Decoders eines Datenempfängers, gemäß einem Ausführungsbeispiel;

Fig. 14    in einem Diagramm Durchlassbereiche benachbarter Filterkanäle der in Fig. 13 gezeigten Filterbank, gemäß einem Ausführungsbeispiel;

Fig. 15    in einem Diagramm einen Durchlassbereich und eine Sperrbandbreite eines Filterkanals der in Fig. 13 gezeigten Filterbank, gemäß einem Ausführungsbeispiel;

Fig. 16    zeigt ein Flussdiagramm eines Verfahrens zum empfangen eines Breitbandsignals, gemäß einem Ausführungsbeispiel; und

Fig. 17    zeigt ein Flussdiagramm eines Verfahrens zum empfangen eines Breitbandsignals, gemäß einem weiteren Ausführungsbeispiel.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

## 1. Telegram-Splitting basiertes Funkübertragungssystem

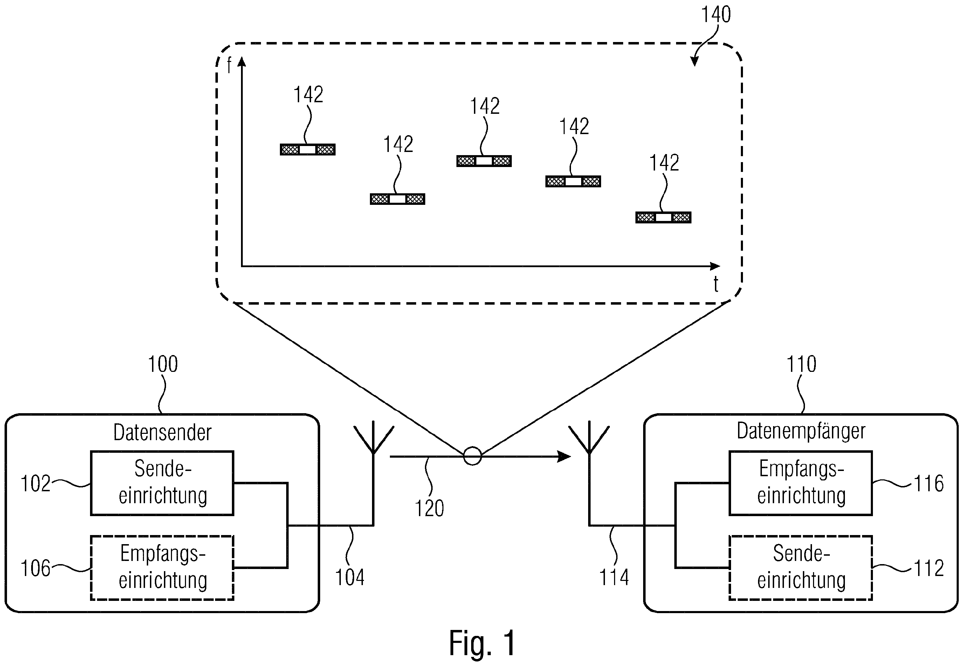

Fig. 1 zeigt ein schematisches Blockschaltbild eines Systems mit einem Datensender 100 und einem Datenempfänger 110. Der Datensender 100 kann ausgebildet sein, um ein Signal 120 zu senden, wobei das Signal 120 zumindest zwei separate Teil-Datenpakete 142 aufweist. Der Datenempfänger 110 kann ausgebildet sein, um das Signal 120 (oder eine durch den Übertragungskanal modifizierte Version des Signals 120)) zu empfangen, welches die zumindest zwei separaten Teil-Datenpakete 142 aufweist.
Wie in Fig. 1 zu erkennen ist, sind die zumindest zwei separaten Teil-Datenpakete 142 in der Zeit und/oder in der Frequenz voneinander separiert bzw. beabstandet. Die Verteilung der zumindest zwei separaten Teil-Datenpakete 142 in der Zeit und/oder Frequenz kann entsprechend eines Sprungmusters (engl. hopping pattern) 140 erfolgen.
Bei Ausführungsbeispielen kann der Datensender 100 eine Sendeeinrichtung (oder Sendemodul, oder Transmitter) 102 aufweisen, die ausgebildet ist, um das Signal 120 zu senden. Die Sendeeinrichtung 102 kann mit einer Antenne 104 des Datensenders 100 verbunden sein. Der Datensender 100 kann ferner eine Empfangseinrichtung (oder Empfangsmodul, oder Receiver) 106 aufweisen, die ausgebildet ist, um ein Signal zu empfangen. Die Empfangseinrichtung 106 kann mit der Antenne 104 oder einer weiteren (separaten) Antenne des Datensenders 100 verbunden sein. Der Datensender 100 kann auch eine kombinierte Sendeempfangseinrichtung (Transceiver) aufweisen.
Bei Ausführungsbeispielen kann der Datenempfänger 110 eine Empfangseinrichtung (oder Empfangsmodul, oder Receiver) 116 aufweisen, die ausgebildet ist, um das Signal 120 zu empfangen. Die Empfangseinrichtung 116 kann mit einer Antenne 114 des Datenempfängers 110 verbunden sein. Ferner kann der Datenempfänger 110 eine Sendeeinrichtung (oder Sendemodul, oder Transmitter) 112 aufweisen, die ausgebildet ist, um ein Signal zu senden. Die Sendeeinrichtung 112 kann mit der Antenne 114 oder einer weiteren (separaten) Antenne des Datenempfängers 110 verbunden sein. Der Datenempfänger 110 kann auch eine kombinierte Sendeempfangseinrichtung (Transceiver) aufweisen.
Bei Ausführungsbeispielen kann der Datensender 100 ein Sensorknoten sein, während der Datenempfänger 110 eine Basisstation sein kann. Typischerweise umfasst ein Kommunikationssystem zumindest einen Datenempfänger 110 (Basisstation) und eine Vielzahl von Datensendern (Sensorknoten, wie z.B. Heizungszähler). Natürlich ist es auch möglich, dass der Datensender 100 eine Basisstation ist, während der Datenempfänger 110 ein Sensorknoten ist. Ferner ist es möglich, dass sowohl der Datensender 100 als auch der Datenempfänger 110 Sensorknoten sind. Des Weiteren ist es möglich, dass sowohl der Datensender 100 als auch der Datenempfänger 110 Basisstationen sind.

Der Datensender 100 und der Datenempfänger 110 können ausgebildet sein, um Daten unter Verwendung eines Telegram-Splitting-Verfahrens (dt. Telegrammaufteilungsverfahrens) zu senden bzw. zu empfangen. Hierbei wird ein die Daten aufweisendes Datenpaket (oder Telegramm) in eine Mehrzahl von Teil-Datenpaketen (oder Sub-Datenpakte) 142 aufgeteilt und die Teil-Datenpakete 142 werden entsprechend eines Sprungmusters 140 in der Zeit verteilt und/oder in der Frequenz verteilt von dem Datensender 100 zu dem Datenempfänger 110 übertragen, wobei der Datenempfänger 110 die Teil-Datenpakete 142 wieder zusammenfügt (oder kombiniert), um das eigentliche Datenpaket zu erhalten. Jedes der Teil-Datenpakete 142 enthält dabei nur einen Teil des Datenpakets 120. Das Datenpaket kann ferner kanalcodiert sein, so dass zum fehlerfreien Decodieren des Datenpakets nicht alle Teil-Datenpakete 142, sondern nur ein Teil der Teil-Datenpakete 142 erforderlich ist.

Die zeitliche Verteilung der Mehrzahl von Teil-Datenpaketen 142 kann, wie bereits erwähnt, entsprechend eines Zeit- und/oder Frequenzsprungmusters 140 erfolgen.

Ein Zeitsprungmuster kann eine Abfolge von Sendezeitpunkten oder Sendezeitabständen angeben, mit denen die Teil-Datenpakete gesendet werden. Beispielsweise kann ein erstes Teil-Datenpaket zu einem ersten Sendezeitpunkt (oder in einem ersten Sendezeitschlitz) und ein zweites Teil-Datenpaket zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben. Zwischen den Teil-Datenpaketen können Sendepausen vorhanden sein, in denen nicht gesendet wird. Die Teil-Datenpakete können sich auch zeitlich überlappen (überschneiden).

Ein Frequenzsprungmuster kann eine Abfolge von Sendefrequenzen oder Sendefrequenzsprüngen angeben, mit denen die Teil-Datenpakete gesendet werden. Beispielsweise kann ein erstes Teil-Datenpaket mit einer ersten Sendefrequenz (oder in einem ersten Frequenzkanal) und ein zweites Teil-Datenpaket mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Natürlich können die Mehrzahl von Teil-Datenpaketen 142 auch sowohl in der Zeit- als auch in der Frequenz verteilt von dem Datensender 100 zu dem Datenempfänger 110 übertragen werden. Die Verteilung der Mehrzahl von Teil-Datenpaketen in der Zeit und in der Frequenz kann entsprechend einem Zeitfrequenzsprungmuster erfolgen. Ein Zeitfrequenzsprungmuster kann die Kombination aus einem Zeitsprungmuster und einem Frequenzsprungmuster sein, d.h. eine Abfolge von Sendezeitpunkten oder Sendezeitabständen mit denen die Teil-Datenpakete 142 übertragen werden, wobei den Sendezeitpunkten (oder Sendezeitabständen) Sendefrequenzen (oder Sendefrequenzsprünge) zugeordnet sind.

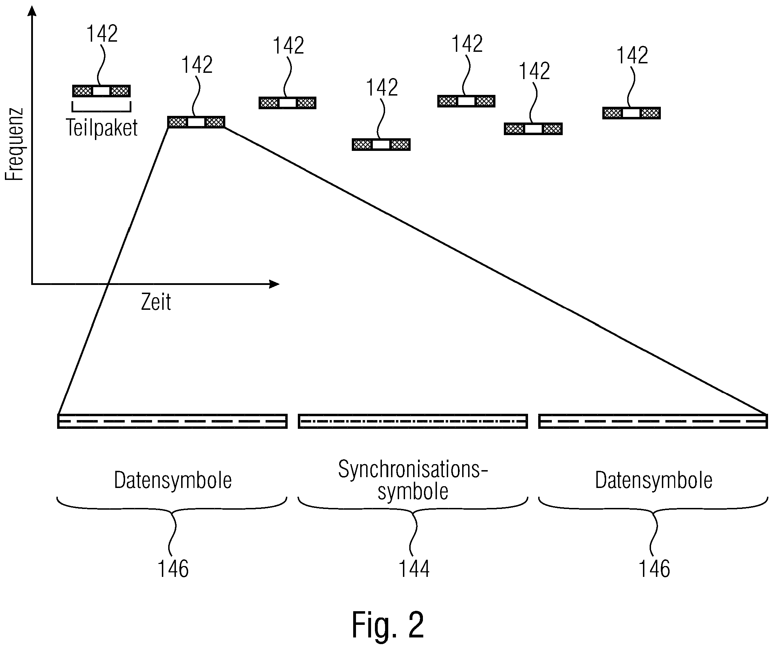

Fig. 2 zeigt in einem Diagramm eine Belegung des Übertragungskanals bei der Übertragung einer Mehrzahl von Teil-Datenpaketen 142 entsprechend einem Zeitfrequenzsprungmuster. Dabei beschreibt die Ordinate die Frequenz und die Abszisse die Zeit.

Wie in Fig. 2 zu erkennen ist, kann das Datenpaket 120 beispielhaft auf n = 7 Teil-Datenpakete 142 aufgeteilt werden und entsprechend eines Zeitfrequenzsprungmusters verteilt in der Zeit und der Frequenz von dem Datensender 100 zu dem Datenempfänger 110 übertragen werden.

Wie in Fig. 2 weiter zu erkennen ist, können die Mehrzahl von Teil-Datenpaketen 142 neben Daten (Datensymbole 146 in Fig. 2) auch Pilotsequenzen (Pilotsymbole (oder Synchronisationssymbole) 144 in Fig. 2) enthalten, basierend auf denen der Datenempfänger 110 die Teil-Datenpakete 142 in einem Empfangssignal 120 oder Empfangsdatenstrom detektieren kann. Bei manchen Ausführungsbeispielen könnte die Detektion auch ohne Nutzung der Pilotsequenzen erfolgen, wobei dieser Fall z.B. bei der Funkaufklärung auftritt, wenn die Pilotsequenzen noch nicht bekannt sind.

Bei der gleichzeitigen bzw. zeitlich überlappenden Aussendung einer Vielzahl von in Teil-Datenpaketen aufgeteilten Datenpaketen durch eine Vielzahl von Datensendern steigt die im Datenempfänger erforderliche Rechenleistung zur Detektion und Decodierung der Teil-Datenpakete jedoch erheblich.

Zur Reduktion der für die Detektion und Decodierung erforderlichen Rechenleistung erfolgt bei Ausführungsbeispielen die Detektion und Decodierung der Teil-Datenpakete getrennt bzw. separat voneinander, wie dies im Folgenden erläutert wird.

**2. Ausführungsbeispiele des Datenempfängers (Systembeschreibung)**

Im Folgenden werden Ausführungsbeispiele der vorliegenden Erfindung beschrieben, die sich auf die Signalverarbeitung und die Datenhaltung bei der Detektion und Decodierung von Datenpaketen im Datenempfänger 110 eines Funkübertragungssystems beziehen.

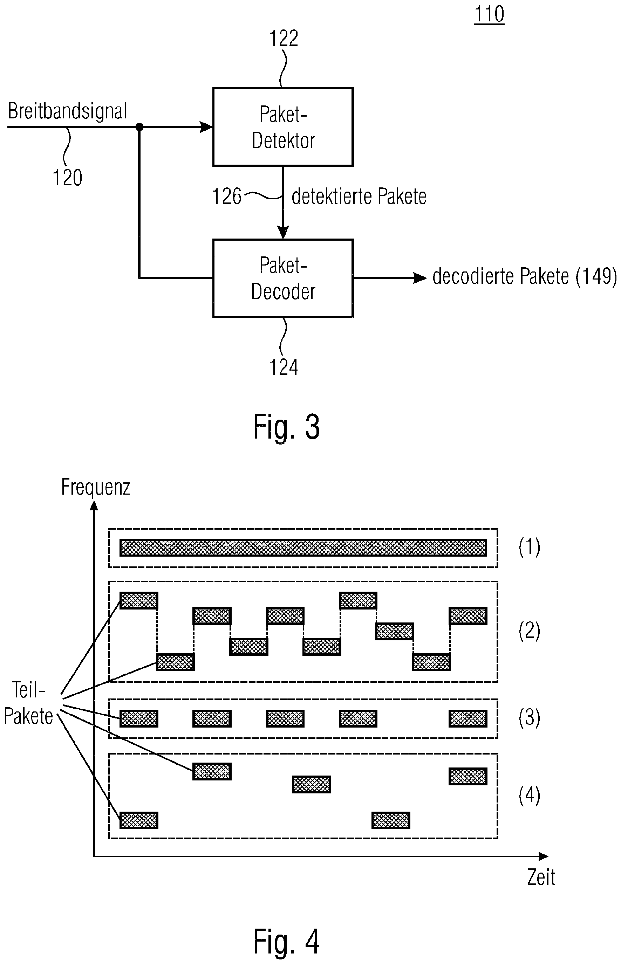

Fig. 3 zeigt ein schematisches Blockschaltbild eines Datenempfängers 110, gemäß einem Ausführungsbeispiel der vorliegenden Erfindung. Der Datenempfänger 110 ist ausgebildet, um ein Breitbandsignal 120 zu empfangen, wobei das Breitbandsignal 120 zumindest zwei Teil-Datenpakete 142 aufweist, die entsprechend eines Sprungmusters 140 über verschiedene Frequenzen (z.B. Frequenzkanäle) verteilt sind.

Der Datenempfänger 110 kann einen Detektor 122 aufweisen, der ausgebildet ist, um eine Detektion der zumindest zwei Teil-Datenpakete 142 in dem Breitbandsignal 120 durchzuführen, und um zumindest einen Detektionsparameter 126 (z.B. einen Detektionszeitpunkt und/oder eine Detektionsfrequenz) für die detektierten Teil-Datenpakete bereitzustellen.

Beispielsweise kann der Detektor 122 ausgebildet sein, um einen Detektionsparameter 126 (z.B. einen Detektionszeitpunkt und/oder eine Detektionsfrequenz) für jedes der detektierten Teil-Datenpakete bereitzustellen. Natürlich kann der Detektor 122 auch ausgebildet sein, um nur einen Detektionsparameter (z.B. einen (Referenz-)Detektionszeitpunkt und/oder eine (Referenz-)Detektionsfrequenz) für das Sprungmuster 140 der zumindest zwei Teil-Datenpakete 142 bereitzustellen, wobei durch die Definition des Sprungmusters (z.B. Sendezeitpunkte und/oder Sendefrequenzen) die Empfangszeitpunkte und/oder Empfangsfrequenzen der zumindest zwei Teil-Datenpakete 142 implizit bekannt sind.

Der Datenempfänger 110 kann ferner einen Decoder 124 aufweisen, der ausgebildet ist, um unter Verwendung des zumindest einen Detektionsparameters 126 eine Decodierung der detektierten Teil-Datenpakete durchzuführen, z.B. um decodierte Pakete 149 zu erhalten.

Der Detektor 122 und der Decoder 124 können dabei separat bzw. getrennt voneinander ausgeführt sein, so dass der Detektor 122 die Detektion (der zumindest zwei Teil-Datenpakete 142) und der Decoder 124 die Decodierung (der detektierten Teil-Datenpakete) getrennt voneinander durchführen oder verarbeiten können. Der Datenempfänger 110 ist also ausgebildet, um die Detektion (der zumindest zwei Teil-Datenpakete 142) und die Decodierung (der detektierten Teil-Datenpakete) getrennt voneinander durchzuführen oder zu verarbeiten.

Bei Ausführungsbeispielen kann der Detektor 122 ausgebildet sein, um die Detektion (der Teil-Datenpakete 142) kontinuierlich durchzuführen.

Bei Ausführungsbeispielen kann der Decoder 124 ausgebildet sein, um die Decodierung in Abhängigkeit von einer zur Verfügung stehenden Rechenleistung des Datenempfängers 110 durchzuführen.

Beispielsweise kann der Decoder 124 ausgebildet sein, um die Decodierung eines der detektierten Teil-Datenpakete durchzuführen, wenn für die Decodierung des jeweiligen detektierten Teil-Datenpakets genügend Rechenleistung zur Verfügung steht.

Mit anderen Worten, Fig. 3 zeigt die Komponenten, einen Paket-Detektor 122 zur Detektion der Pakete in einem Breitbandsignal 120 und einen Paket-Decoder 124 zur Auswertung der detektierten Pakete. Die detektierten Pakete stellen hierbei die Detektionszeitpunkte dar, an denen mutmaßlich ein Paket am Empfänger 110 angekommen ist.

Wie in Fig. 3 beispielhaft gezeigt ist, kann der Datenempfänger 110 einen Detektor (Paket-Detektor) 122 und einen Decoder (Paket-Decoder) 124 aufweisen. Natürlich kann der Datenempfänger 110 auch mittels eines Prozessors, Mikroprozessors oder einer anderen programmierbaren logischen Schaltung implementiert sein, wobei in diesem Fall die in Fig. 3 gezeigten Schaltungsblöcke beispielsweise durch entsprechende Algorithmen implementiert sein können.

Fig. 4 zeigt in einem Diagramm eine Belegung des Übertragungskanals bei der Übertragung von Datenpaketen unter Verwendung von vier unterschiedlichen Übertragungsverfahren. Dabei beschreibt in Fig. 4 die Ordinate die Frequenz und die Abszisse die Zeit. Mit anderen Worten, Fig. 4 zeigt vier mögliche Verfahren zur Übertragung eines einzelnen Paketes.

Ein erstes Übertragungsverfahren (Fall 1) umfasst eine kontinuierliche Übertragung eines Datenpakets bei konstanter Frequenz.

Ein zweites Übertragungsverfahren (Fall 2) umfasst eine kontinuierliche Übertragung eines Datenpakets in Verbindung mit einem Frequenzsprung-Verfahren.

Ein drittes Übertragungsverfahren (Fall 3) umfasst eine diskontinuierliche Übertragung eines Datenpakets (Telegramm-Splitting) bei konstanter Frequenz.

Ein viertes Übertragungsverfahren (Fall 4) umfasst eine diskontinuierliche Übertragung eines Datenpakets (Telegramm-Splitting) in Verbindung mit einem Frequenzsprung-Verfahren.

Ausführungsbeispiele des Datenempfängers 110 sind für alle vier Verfahren relevant, wenn eine Vielzahl von Paketen empfangen werden soll, die von verschiedenen Sendern asynchron und auf verschiedenen Frequenzen ausgesendet werden, so dass das Breitbandsignal 120 am Eingang eine wesentlich höhere Bandbreite aufweist als die (Teil-)Pakete (Im Fall 1 Pakete, in den Fällten 2 bis 4 Teil-Pakete). Besonders relevant werden Ausführungsbeispiele des Datenempfängers 110 im Fall 4, der ein besonders hohes Maß an parallelen asynchronen Paketübertragungen ermöglicht.

Hinzu kommt, dass in den Sendern 100 aus Kostengründen Frequenzgeneratoren mit relativ hoher Toleranz verwendet werden, so dass in allen vier Fällen ein Frequenzversatz zwischen Sender 100 und Empfänger 110 auftritt, der ein Vielfaches der Symbolrate $f_{sym}$ der Teil-Pakete 142 betragen kann. Da dieser Effekt die Wahrscheinlichkeit für Paket-Kollisionen verringert, kann der maximale Durchsatz des Übertragungssystems erhöht werden, indem den Sendefrequenzen gezielt eine stochastische Komponente hinzufügt wird. Dadurch sind die Sendefrequenzen im Empfänger 110 prinzipiell unbekannt.

Die Detektion und Synchronisation der Pakete im Empfänger 110 kann mit Hilfe von Synchronisationssequenzen (Pilotsequenzen mit Synchronisationssymbolen 144) in den (Teil-)Paketen erfolgen. In der Regel sind diese Sequenzen in der Mitte der Teil-Pakete 142 angeordnet (*Midamble*). Ausführungsbeispiele sind jedoch für alle möglichen Anordnungen der Synchronisationssequenz (Preamble, Midamble, Postamble) anwendbar.

## 2.1 Signalverarbeitung im Detektor

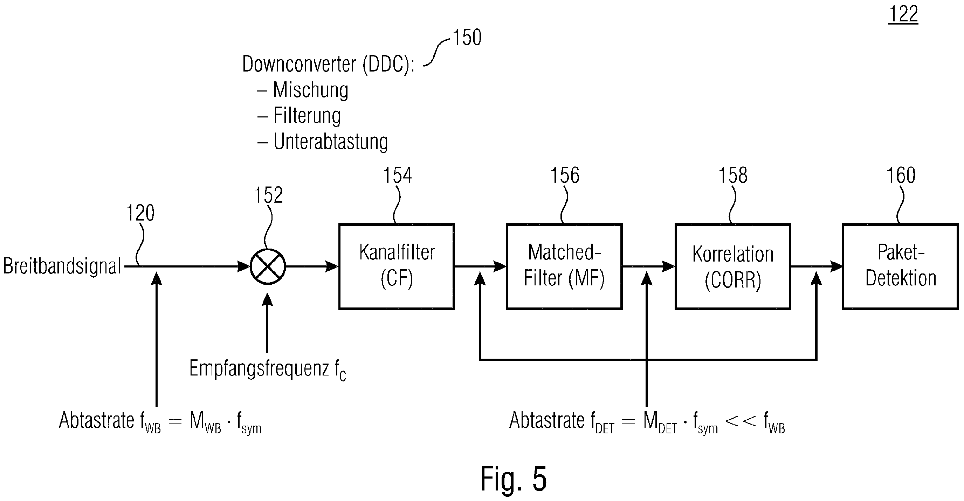

Fig. 5 zeigt ein schematisches Blockschalbild eines einkanaligen Detektors 122, gemäß einem Ausführungsbeispiel. Der Detektor 122 kann einen DDC 150 (= digital down converter, dt. digitaler Abwärtswandler) aufweisen, der ausgebildet sein kann, um das Breitbandsignal 150 zu mischen und zu filtern. Hierfür kann der DDC 150 beispielsweise einen Mischer 152 und einen Kanalfilter 154 aufweisen. Ferner kann der Detektor 122 einen Matched-Filter 156, einen Korrelator 158 und eine Paket-Detektion 160 aufweisen.

Mit anderen Worten, Fig. 5 zeigt die Signalverarbeitung in einem einkanaligen Detektor 122 bei bekannter Empfangsfrequenz fc. Dabei wird die Abtastrate des Signals im DDC 150 von der Abtastrate $f_{WB}$ des Breitbandsignals 120 auf die Abtastrate $f_{DET}$ der nachfolgenden Komponenten 156, 158 reduziert. Das Kanalfilter (CF) 154 kann als Anti-Alias-Filter für die Unterabtastung wirken und kann hierzu eine ausreichend hohe Sperrdämpfung aufweisen.

Auf den DDC 150 folgen ein Matched Filter (MF) 156 zur Impulsfilterung, eine mehrstufige Korrelation (CORR) 158 für die Synchronisationssequenzen der Teil-Pakete und deren Zusammenfassung, und die eigentliche Paket-Detektion 160.

Im Folgenden werden alle Abtastraten zusätzlich in Vielfachen der Symbolrate $f_{sym}$ der Teil-Pakete 142 angegeben. Für den Detektor 122 gilt:

$$f_{WB} = M_{WB} \cdot f_{sym} \text{ und } f_{DET} = M_{DET} \cdot f_{sym}$$

Werte für $M_{DET}$ sind beispielsweise (z.B. typischerweise) 2 und 4, d.h. die Verarbeitung im Detektor 122 kann beispielsweise (z.B. in der Regel) mit der doppelten oder der vierfachen Symbolrate erfolgen. Der Wert für $M_{WB}$ ist in der Regel (z.B. erheblich) größer, d.h. es gilt:

$$f_{DET} \ll f_{WB} \text{ bzw. } M_{DET} \ll M_{WB}$$

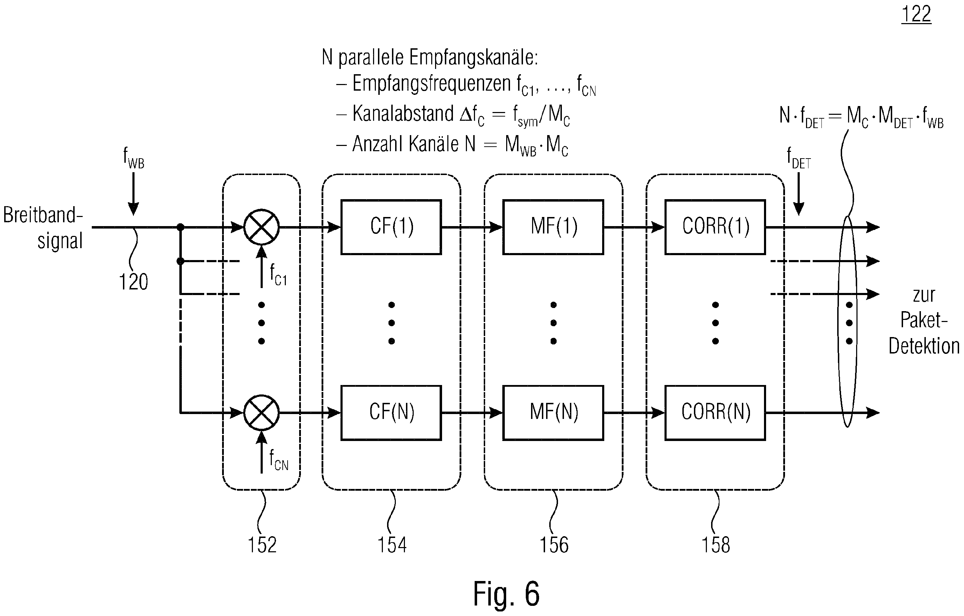

Aufgrund des Frequenzversatzes zwischen Sender 100 und Empfänger 110 kann der Detektor 122 als Vielkanal-Detektor mit N parallelen Empfangskanälen ausgeführt werden, wie dies im Folgenden anhand von Fig. 6 erläutert wird.

Fig. 6 zeigt ein schematisches Blockschaltbild eines Vielkanal-Detektors 122, gemäß einem Ausführungsbeispiel. Mit anderen Worten, Fig. 6 zeigt einen Vielkanal-Detektor mit N Kanälen. Wie in Fig. 6 zu erkennen ist, kann der Vielkanal-Detektor 122 für jeden Kanal einen Mischer 152, einen Kanalfilter 154, einen Matched-Filter 156 und einen Korrelator 158 aufweisen.

Der zulässige Kanalabstand

$$\Delta f_C = f_{sym} / M_C$$

kann von den verwendeten Synchronisationssequenzen und der Art der Korrelation abhängen und kann beispielsweise (z.B. in der Regel) 1/4... 1/16 der Symbolrate $f_{sym}$ betragen:

$$M_C = 4 \ldots 16$$

Dadurch kann der Datenstrom am Ausgang der Matched Filter 156 sowie am Ausgang der ersten Stufe der Korrelation um den Faktor $M_C \cdot M_{DET}$ größer sein als der Datenstrom des Breitbandsignals 120 am Eingang. Die Anzahl der Kanäle beträgt:

$$N = M_{WB} \cdot M_C$$

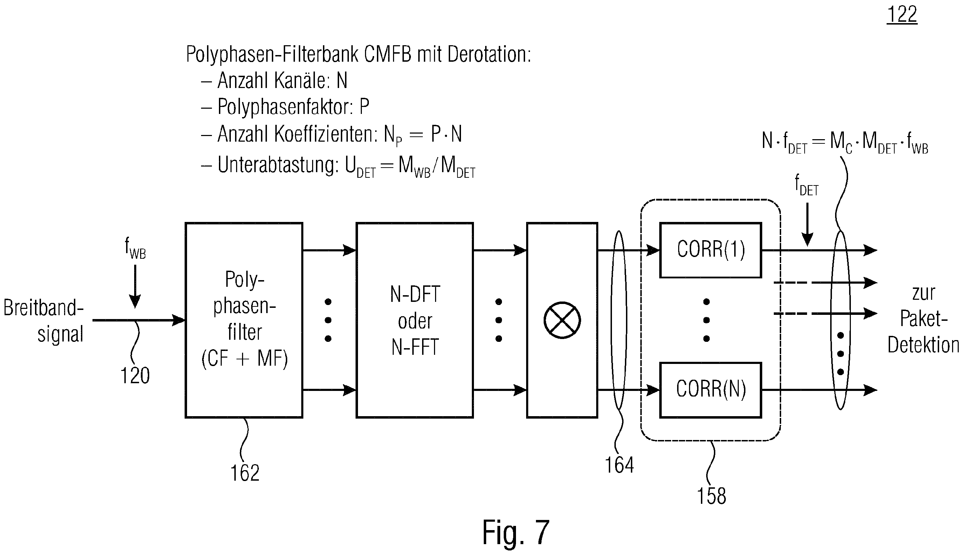

Die Realisierung der Mischer 152, der Kanalfilter (CF) 154 und der Matched Filter (MF) 156 kann durch eine Polyphasen-Filterbank (CMFB) erfolgen, wie dies in Fig. 7 gezeigt ist. Dabei werden die Filter CF 154 und MF 156 zu einem Polyphasenfilter (CF+MF) zusammengefasst.

Im Detail zeigt Fig. 7 ein schematisches Blockschalbild des Detektors 122, gemäß einem Ausführungsbeispiel. Die Detektor 122 umfasst eine (erste) Filterbank 162 und die Korrelatoren 158, wobei die Filterbank 162 ausgebildet sein kann, um das Breitbandsignal 120 durch eine Polyphasenfilterung (und z.B. eine N-Punkt-DFT oder N-Punkt-FFT) in N Teilbandsignale 164 aufzuteilen. Die Korrelatoren 158 können ausgebildet sein, um die Detektion der Teil-Datenpakete 142 in den N Teilbandsignalen 164 durchzuführen, z.B. durch Korrelation der N Teilbandsignale 164 mit einer in den Teil-Datenpaketen 142 enthaltenen (bekannten) Synchronisationssequenz oder Synchronisationssequenzen.

Wie in Fig. 7 ferner zu erkennen ist, kann die Vielkanal-Filterung mit einer N-Punkt-DFT oder - falls N eine Zweierpotenz ist - mit einer N-Punkt-FFT erfolgen. Der Polyphasenfaktor P gibt das Verhältnis aus der Anzahl $N_P$ der Filterkoeffizienten und der Anzahl N der Kanäle an und hängt vom Kanalabstand - gegeben durch den Faktor Mc - und der erforderlichen Sperrdämpfung des Filters ab. Werte liegen beispielsweise (z.B. typischerweise) im Bereich P = 1...2. Für P = 1 ergibt sich eine gewöhnliche Filterbank mit $N_P = N$.

Die Unterabtastung um den Faktor

$$U_{DET} = f_{WB} / f_{DET} = M_{WB} / M_{DET}$$

kann durch eine entsprechende Schrittweite im Breitbandsignal realisiert werden.

Die Signale der einzelnen Kanäle können durch eine Derotation in Basisbandsignale (Teilbandsignale) ohne Frequenzversatz umgewandelt werden.

Die nachfolgende Tabelle (Tabelle 1) fasst die Parameter des Detektors 122 zusammen und nennt Beispiele für ein System 1 mit MWB = 96 und ein System 2 mit MWB = 1024. Für beide Systeme gilt beispielhaft MDET = 2 und MC = 8.

| Bezeichnung des Parameters | Parameter | Gleichung | System 1 | System 2 |
|---|---|---|---|---|
| Überabtastung des Breitbandsignals | $M_{WB}$ | | 96 | 1024 |
| Überabtastung in Zeitrichtung | $M_{DET}$ | | 2 | 2 |
| Überabtastung in Frequenzrichtung | $M_C$ | | 8 | 8 |
| Unterabtastung = Schrittweite | $U_{DET}$ | $M_{WB}/M_{DET}$ | 48 | 512 |
| Anzahl Kanäle = Länge der DFT/FFT | N | $M_{WB} \cdot M_C$ | 768 | 8192 |
| Polyphasenfaktor | P | | 1 | 1 |
| Anzahl Koeffizienten des Filters | $N_P$ | $P \cdot N$ | 768 | 8192 |
| Zunahme des Datenstroms | $K_{DET}$ | $M_C \cdot M_{DET}$ | 16 | 16 |

Der erforderliche Rechenaufwand ist aufgrund der typischerweise hohen Kanalanzahl N sehr hoch und hängt nur geringfügig von der Anzahl der detektierten Pakete ab.

## 2.2 Verzögerung des Breitbandsignals

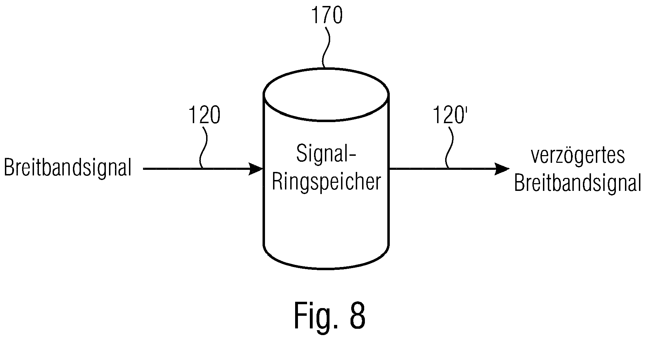

Die Verarbeitung im Paket-Detektor 122 weist eine Verzögerung auf, die sich aus der Verzögerung der Filter und dem Abstand zwischen den Synchronisationssequenzen des ersten und des letzten Teil-Pakets 142 zusammensetzen kann. Deshalb kann das Breitbandsignal 120 mittels eines Signal-Ringspeichers 170 verzögert werden, bevor es dem Paket-Decoder 124 zugeführt werden kann, wie dies in Fig. 8 gezeigt ist.

Im Detail zeigt Fig. 8 ein schematisches Blockschalbild eines Signal-Ringspeichers 170, der ausgebildet ist, um das empfangene Breitbandsignal 120 zwischen zu speichern, um ein verzögertes Breitbandsignal 120' zu erhalten. Mit anderen Worten, Fig. 8 zeigt eine Verzögerung des Breitbandsignals 120.

In einem Software-Empfänger 110 für einen massiv parallelen Empfang kann die Verzögerung zusätzlich die Zeit umfassen, die von der Detektion eines Pakets bis zur tatsächlichen Verarbeitung des Pakets verstreichen kann.

**2.3 Signalverarbeitung im Decoder**

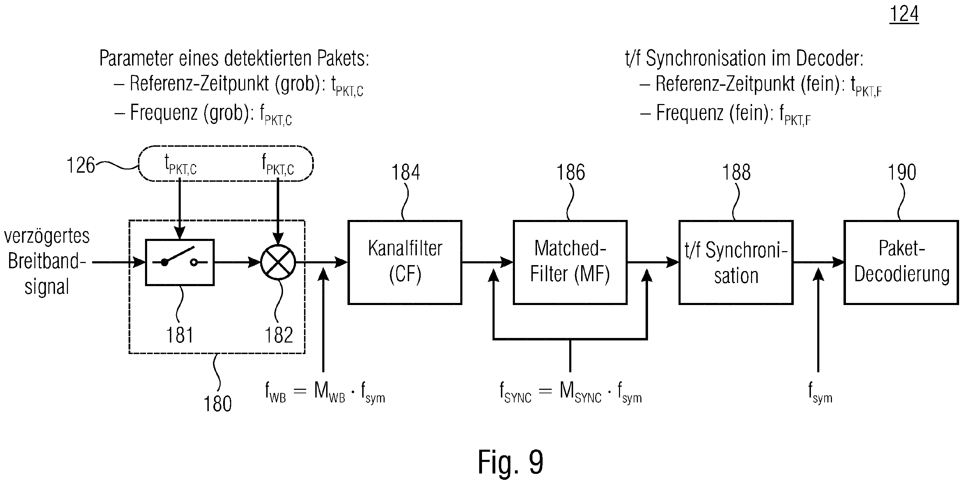

Fig. 9 zeigt ein schematisches Blockschaltbild eines Decoders 124, gemäß einem Ausführungsbeispiel. Der Decoder 124 ist ausgebildet, um basierend auf dem von dem Detektor 122 bereitgestellten Detektionsparameter 126 (z.B. Referenzzeitpunkt (grob) $t_{PKT,C}$, und Frequenz (grob) $f_{PKT,C}$) ein detektiertes Teil-Datenpaket 142 zu decodieren.

Der Decoder 124 kann beispielsweise einen Extrahierer 180 aufweisen, der ausgebildet ist, um basierend auf dem von dem Detektor 122 bereitgestellten Detektionsparameter 126 (z.B. Referenzzeitpunkt (grob) $t_{PKT,C}$, und Frequenz (grob) $f_{PKT,C}$) einen geeigneten Signalabschnitt (z.B. in Frequenz- und Zeitrichtung, symbolisiert durch Schalter 181 und Mischer 182) auszuwählen. Ferner kann der Decoder 124 einen Mischer 182, einen Kanalfilter 184, einen Matched-Filter 186, eine t/f Synchronisation 188 und eine Paketdecodierung 190 aufweisen.

Wie in Fig. 9 zu erkennen ist, kann die Verarbeitung im Decoder auf der Basis der Parameter (Detektionsparameter 126) eines detektierten Pakets erfolgen. Hierbei kann der ReferenzZeitpunkt $t_{PKT,C}$ dem Detektionszeitpunkt im Paket-Detektor 122 mit einer zeitlichen Granularität $\Delta t_{PKT,C}$ = 1/ $f_{DET}$ entsprechen. Die Frequenz $f_{PKT,C}$ kann der Mittenfrequenz des Detektor-Kanals entsprechen, in dem das Paket detektiert wurde. Die Granularität $\Delta f_{PKT,C}$ kann dem Kanalabstand $\Delta f_C$ entsprechen.

Der Schalter 180 und der Mischer 182 in Fig. 9 symbolisieren die Auswahl der Signalabschnitte der Teil-Pakete 142 in Zeit- und Frequenzrichtung anhand der Parameter (Detektionsparameter) 126, Im Kanalfilter (CF) 184 kann eine Unterabtastung auf die Abtastrate erfolgen:

$$f_{SYNC} = M_{SYNC} \cdot f_{sym}$$

Der zugehörige Unterabtastfaktor beträgt:

$$U_{SYNC} = f_{WB} / f_{SYNC} = M_{WB} / M_{SYNC}$$

Daraus ergibt sich für die nachfolgende t-Synchronisation $t_{PKT,F}$ eine Granularität $\Delta t_{PKT,F}$ = 1/ $f_{SYNC}$. Werte liegen beispielsweise (z.B. typischerweise) im Bereich $M_{SYNC}$ = 4...16.

Auch im Decoder 124 können das Kanalfilter (CF) 184 und das Matched Filter (MF) 186 zu einem einzigen Filter (CF+MF) zusammengefasst werden. Hierbei kann beispielsweise das gleiche Filter wie in der Polyphasen-Filterbank (CMFB) 162 des Detektors 124 in Fig. 7 resultieren. Die Filterung kann als gewöhnliche Polyphasen-Filterung mit einer Unterabtastung um den Faktor $U_{SYNC}$ erfolgen. Alternativ kann die Filterung mittels schneller Faltung (*Fast Convolution*) im Frequenzbereich erfolgen. Dies bietet sich auch deshalb an, weil die Signalabschnitte der Teil-Pakete häufig so kurz sind, dass die schnelle Faltung in einem Block erfolgen kann.

Die f-Synchronisation $f_{PKT,F}$ kann durch eine entsprechende Rotation des Signals nach dem Matched Filter (MF) 186 erfolgen. Bei erhöhten Anforderungen durch ein höherstufiges Modulationsverfahren in Verbindung mit einer hohen Granularität $\Delta f_{PKT,C}$ kann es jedoch erforderlich sein, die Mischung und Filterung mit dem genaueren Wert $f_{PKT,F}$ zu wiederholen, um die durch den Frequenzversatz

$$\Delta f_{PKT} = f_{PKT,F} - f_{PKT,C}$$

verursachte Symbolinterferenz zu beseitigen.

Nach erfolgter t/f-Synchronisation können die Symbole mit der Symbolrate $f_{sym}$ entnommen und der Paket-Decodierung 190 zugeführt werden.

Die nachfolgende Tabelle (Tabelle 2) fasst beispielhafte Parameter im Decoder 124 zusammen.

| Bezeichnung des Parameters | Parameter | Gleichung | System 1 | System 2 |
|---|---|---|---|---|
| Überabtastung des Breitbandsignals | $M_{WB}$ | | 96 | 1024 |
| Überabtastung in Zeitrichtung | $M_{SYNC}$ | | 12 | 8 |

(fortgesetzt)

| Bezeichnung des Parameters | Parameter | Gleichung | System 1 | System 2 |
|---|---|---|---|---|
| Unterabtastung | $U_{SYNC}$ | $M_{WB}/M_{SYNC}$ | 8 | 128 |
| Anzahl Koeffizienten (CF+MF) | $N_P$ | siehe Det. | 768 | 8192 |

Die in Fig. 9 gezeigte Verarbeitung ist für jedes detektierte Teil-Paket 142 durchzuführen, d.h. der erforderliche Rechenaufwand ist proportional zur Anzahl der detektierten Teil-Pakete 142. Bei massiv parallelem Empfang nimmt der Rechenaufwand stark zu und kann den Rechenaufwand im Detektor 122 überschreiten.

### 2.4 Zusammenspiel von Paket-Detektor und Paket-Decoder

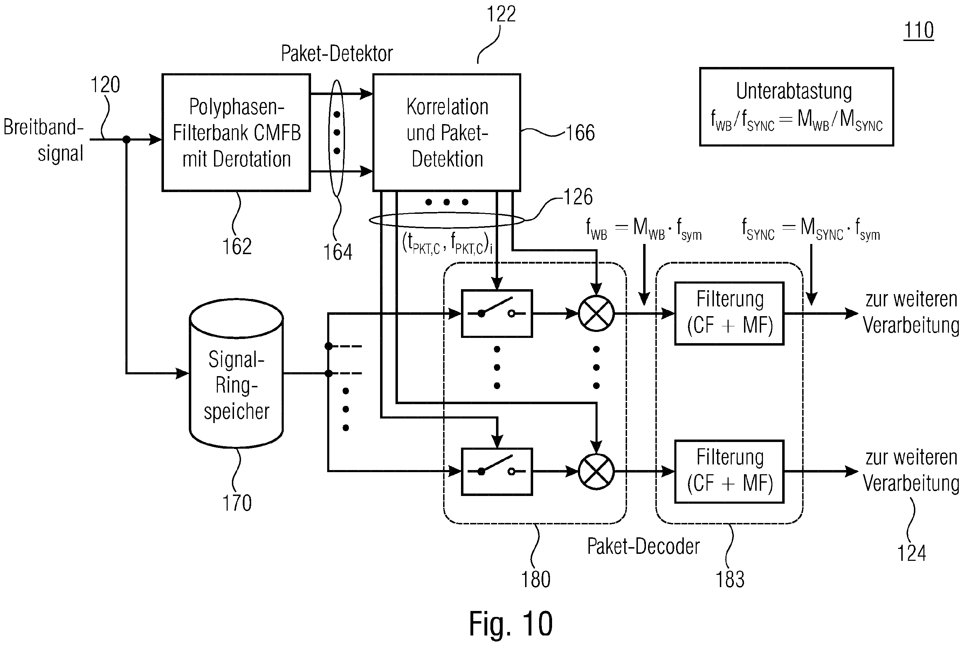

Fig. 10 zeigt ein schematisches Blockschaltbild eines Datenempfängers 110, gemäß eines nicht beanspruchten Auführungsbeispiels.

Der Datenempfänger 110 umfasst einen Detektor 122, einen Decoder 124 und einen Signal-Ringspeicher 170.

Der Detektor 122 kann eine erste Filterbank 162 umfassen, die ausgebildet sein kann, um das Breitbandsignal 120 für die Detektion der Teil-Datenpakete 142 in N Teilbandsignale 164 aufzuteilen, wobei die N Teilbandsignale unterschiedliche (z.B. sich teilweise überlappende) Teilbänder des Breitbandsignals 120 aufweisen können. Der Detektor 122 kann ausgebildet sein, um die Detektion der Teil-Datenpakete 142 in den N Teilbandsignalen 164 durchzuführen, beispielsweise durch Korrelation der N Teilbandsignale 164 mit einer in den Teil-Datenpaketen 142 enthaltenen (bekannten) Synchronisationssequenz oder Synchronisationssequenzen, um Detektionsparameter 126 (z.B. Detektionszeitpunkte und/oder Detektionsfrequenzen) für die detektierten Teil-Datenpakete 142 bereitzustellen. Beispielsweise kann der Detektor 122 eine Korrelation und Paket-Detektion 166 aufweisen, die ausgebildet sein kann, um die Korrelation und Paket-Detektion durchzuführen. Hierzu kann die Korrelation und Paket-Detektion 166 z.B. die in Fig. 7 gezeigten Korrelatoren 158 aufweisen.

Der Signal-Ringspeicher 170 kann ausgebildet sein, um das empfangene Breitbandsignal 120 zwischen zu speichern, um ein verzögertes Breitbandsignal 120' bereitzustellen.

Der Decoder 124 kann ausgebildet sein, um die detektierten Datenpakete 142 unter Verwendung der Detektionsparameter 126 aus dem empfangen Breitbandsignal 120 (bzw. aus der verzögerten Version des empfangenen Breitbandsignals 120') zu extrahieren. Hierzu kann der Decoder 124 beispielsweise eine Mehrzahl der in Fig. 9 gezeigten Extrahierer 180 und Filterung 183 (z.B. Kanalfilter 184 und Matched-Filter 186) aufweisen. Dabei kann eine Anzahl an Kanälen des Decoders 124 mit einer Anzahl N an Kanälen des Detektors 122 übereinstimmen. Natürlich kann der Decoder 124 auch mehr oder weniger Kanäle aufweisen als der Detektor 122.

Bei einer geringen Anzahl an detektierten Paketen ist das in Fig. 9 gezeigte Ausführungsbeispiel des Datenempfängers 110 ohne Probleme verwendbar. Da hierbei die Signalabschnitte mit den Teil-Paketen 142 aus dem Breitbandsignal 120 extrahiert werden, fällt aufgrund der hohen Unterabtastung $U_{SYNC}$ ein hoher Rechenaufwand an, der bei massiv parallelem Empfang unter gewissen Umständen problematisch werden kann.

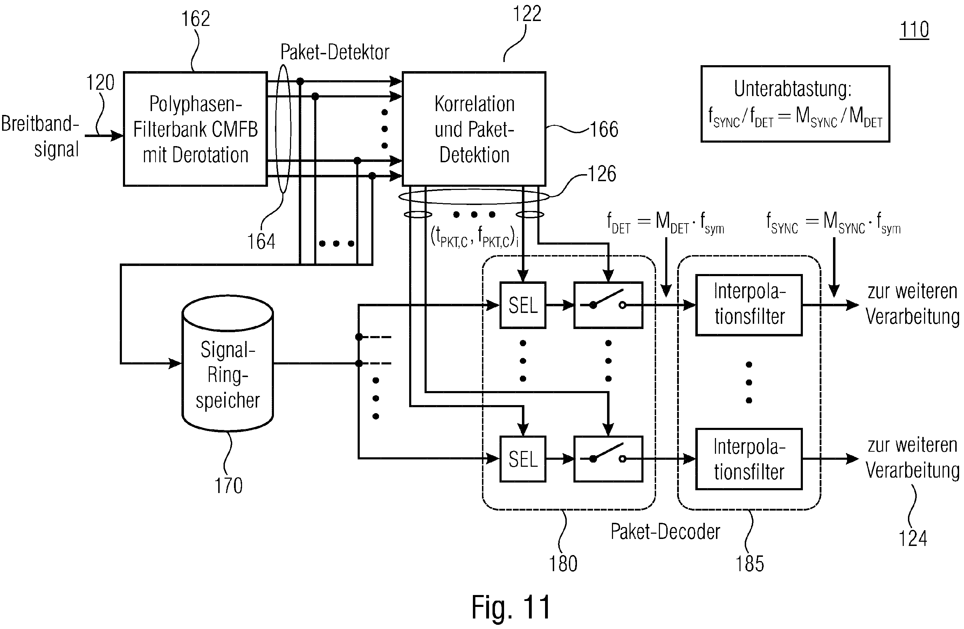

Abhilfe kann das in Fig. 11 gezeigte Ausführungsbeispiel eines Datenempfängers 110 schaffen, bei dem die Teilbandsignale 164 aus dem Paket-Detektor 122 auch im Paket-Decoder 124 verwendet werden.

Im Detail zeigt Fig. 11 ein schematisches Blockschaltbild eines Datenempfängers 110, gemäß eines weiteren nicht beanspruchten Ausführungsbeispiels. Der Datenempfänger 110 umfasst einen Detektor 122, einen Decoder 124 und einen Signal-Ringspeicher 170.

Der Detektor 122 kann eine erste Filterbank 162 umfassen, die ausgebildet sein kann, um das Breitbandsignal 120 für die Detektion der Teil-Datenpakete 142 in N Teilbandsignale 164 aufzuteilen, wobei die N Teilbandsignale 164 unterschiedliche (z.B. sich teilweise überlappende) Teilbänder des Breitbandsignals 120 aufweisen. Der Detektor 122 kann ausgebildet sein, um die Detektion der Teil-Datenpakete 142 in den N Teilbandsignalen 164 durchzuführen, beispielsweise durch Korrelation der N Teilbandsignale 164 mit einer in den Teil-Datenpaketen 142 enthaltenen (bekannten) Synchronisationssequenz oder Synchronisationssequenzen, um Detektionsparameter 126 (z.B. Detektionszeitpunkte und/oder Detektionsfrequenzen) für die detektierten Teil-Datenpakete 142 bereitzustellen. Beispielsweise kann der Detektor 122 eine Korrelation und Paket-Detektion 166 aufweisen, die ausgebildet sein kann, um die Korrelation und Paket-Detektion durchzuführen. Hierzu kann die Korrelation und Paket-Detektion 166 z.B. die in Fig. 7 gezeigten Korrelatoren 158 aufweisen.

Der Signal-Ringspeicher 170 kann ausgebildet sein, um die von der ersten Filterbank 162 des Detektor 122 bereitgestellten N Teilbandsignale 164 zwischen zu speichern.

Der Decoder 124 kann ausgebildet sein, um die detektierten Teil-Datenpakete 142 unter Verwendung der Detektionsparameter 126 (z.B. Detektionszeitpunkte und/oder Detektionsfrequenzen) aus den jeweiligen im Signal-Ringspeicher 170 zwischengespeicherten Teilbandsignalen 164 zu extrahieren, beispielsweise durch Filterung (z.B. Kanalfilter und/oder Matched Filter) und (feine) Zeit- und/oder Frequenz-Synchronisation.

Hierzu kann der Decoder 124 beispielsweise eine Mehrzahl von Extrahierern 180 und Interpolationsfiltern 185 aufweisen. Dabei kann eine Anzahl an Kanälen des Decoders 124 mit einer Anzahl N an Kanälen des Detektors 122 übereinstimmen. Natürlich kann der Decoder 124 auch mehr oder weniger Kanäle aufweisen als der Detektor 122.

In Fig. 11 symbolisieren die Selektoren (SEL) und die Schalter die Entnahme der Signalabschnitte der Teil-Pakete aus den jeweiligen Teilbandsignalen 164 des Paket-Detektors 122. Eine Mischung ist aufgrund der Derotation der Signale in der Polyphasen-Filterbank 162 des Paket-Detektors 122 nicht erforderlich.

In dieser Anordnung kann eine Überabtastung (Interpolation) um den Faktor

$$f_{SYNC} / f_{DET} = M_{SYNC} / M_{DET}$$

durchgeführt werden. Der dazu erforderliche Rechenaufwand ist erheblich geringer, da die selektive Filterung bereits durch das Polyphasen-Filter im Paket-Detektor 122 erfolgt und deshalb eine einfache Interpolation im Frequenzbereich verwendet werden kann. Dadurch wird der erforderliche Rechenaufwand bei massiv parallelem Empfang im Vergleich zu dem in Fig. 10 gezeigten Ausführungsbeispiel des Datenempfängers 110 erheblich reduziert.

Jedoch hat auch das in Fig. 11 gezeigte Ausführungsbeispiel des Datenempfängers 110 unter gewissen Umständen einen Nachteil, der darin bestehen kann, dass der Datenstrom der Detektorsignale (Teilbandsignale 164) um den in Tabelle 1 genannten Faktor $K_{DET}$ größer ist als der Datenstrom des Breitbandsignals 120. Dadurch nimmt die erforderliche Größe des Signal-Ringspeichers 170 ebenfalls um den Faktor $K_{DET}$ zu. Werte für $K_{DET}$ liegen beispielsweise (z.B. typischerweise) im Bereich 8...16. Bei Breitbandsignalen 120 mit einer hohen Bandbreite nimmt bereits der Datenstrom des Breitbandsignals hohe Werte an. Eine weitere erhebliche Zunahme ist in diesen Fällen problematisch oder sogar unmöglich. Als Beispiel seien hier die Werte des Systems 2 mit $M_{WB}$ = 1024 und einer Symbolrate $f_{sym}$ = 2 kBaud genannt. Die Abtastrate $f_{WB}$ des Breitbandsignals 120 beträgt in diesem Fall 2048 ksps. Nimmt man an, dass die diskontinuierliche Aussendung der Teil-Pakete 142 eines Pakets etwa 5 Sekunden in Anspruch nimmt und das komplexwertige Breitbandsignal im Gleitkomma-Format mit 8 Bytes pro komplexem Abtastwert vorliegt, beträgt der Datenstrom des Breitbandsignals 16 MByte/s und die Speichergröße eines Signal-Ringpuffers für das Breitbandsignal 80 MByte. Daraus folgt mit $K_{DET}$ = 16 für einen Signal-Ringpuffer für die Detektorsignale eine Speichergröße von 1280 MByte. Durch die Verwendung anderer Datenformate kann die Speichergröße zwar reduziert werden, dabei bleibt jedoch der Faktor $K_{DET}$ zwischen den beiden Varianten näherungsweise erhalten.

Die nachfolgende Tabelle (Tabelle 3) fasst die Eigenschaften der beiden Ausführungsbeispiele des Datenempfängers 110 aus Fig. 10 und Fig. 11 zusammen.

| Anordnung | Rechenaufwand | Speicherbedarf |
|-----------|---------------|----------------|
| Fig. 10   | hoch          | gering         |
| Fig. 11   | gering        | hoch           |

### 2.5 Verwendung einer Vorzerlegung des Breitbandsignals

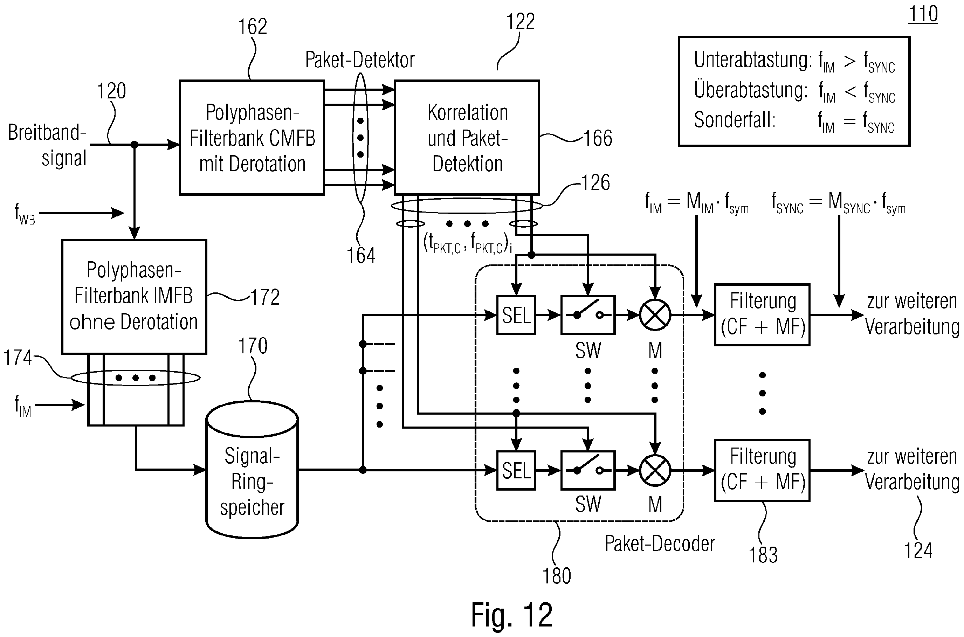

Fig. 12 zeigt ein schematisches Blockschaltbild eines Datenempfängers 110, gemäß eines erfindungsgemäßen Ausführungsbeispiels. Der Datenempfänger 110 umfasst einen Detektor 122, einen Decoder 124, eine zweite Filterbank 172 und einen Signal-Ringspeicher 170.

Der Detektor 122 kann eine erste Filterbank 162 umfassen, die ausgebildet sein kann, um das Breitbandsignal 120 für die Detektion der Teil-Datenpaketen 142 in N Teilbandsignale 164 aufzuteilen, wobei die N Teilbandsignale unterschiedliche (z.B. sich teilweise überlappende) Teilbänder des Breitbandsignals 120 aufweisen. Der Detektor 122 kann ausgebildet sein, um die Detektion der Teil-Datenpakete 142 in den N Teilbandsignalen 164 durchzuführen, beispielsweise durch Korrelation der N Teilbandsignale 164 mit einer in den Teil-Datenpaketen 142 enthaltenen (bekannten) Synchronisationssequenz oder Synchronisationssequenzen, um Detektionsparameter 126 (z.B. Detektionszeitpunkte und/oder Detektionsfrequenzen) für die detektierten Teil-Datenpakete 142 bereitzustellen.

Beispielsweise kann der Detektor 122 eine Korrelation und Paket-Detektion 166 aufweisen, die ausgebildet sein kann, um die Korrelation und Paket-Detektion durchzuführen. Hierzu kann die Korrelation und Paket-Detektion 166 z.B. die in Fig. 7 gezeigten Korrelatoren 158 aufweisen.

Die zweite Filterbank 172 kann ausgebildet sein, um das Breitbandsignal 120 für die Decodierung der detektierten Teil-Datenpakete 142 in $N_{IM}$ Teilbandsignale 174 aufzuteilen, wobei die $N_{IM}$ Teilbandsignale 174 unterschiedliche (z.B. sich teilweise überlappende) Teilbänder des Breitbandsignals 120 aufweisen.

Hierbei ist erfindungsgemäß eine Anzahl $N_{IM}$ an Teilbandsignalen der von der zweiten Filterbank 172 bereitgestellten Teilbandsignale 174 für die Decodierung der detektierten Teil-Datenpakete 142 geringer als eine Anzahl N an Teilbandsignalen der von der ersten Filterbank 162 des Detektors 122 bereitgestellten Teilbandsignale 164 für die Detektion der zumindest zwei Teil-Datenpakete 142.

Der Signal-Ringspeicher 170 kann ausgebildet sein, um die von der zweiten Filterbank 172 bereitgestellten $N_{IM}$ Teilbandsignale 174 zwischen zu speichern.

Der Decoder 124 kann ausgebildet sein, um die detektierten Teil-Datenpakete unter Verwendung der Detektionsparameter 126 (z.B. Detektionszeitpunkte und/oder Detektionsfrequenzen) aus den jeweiligen in dem Signal-Ringspeicher 170 zwischengespeicherten Teilbandsignalen 174 zu extrahieren, beispielsweise durch Filterung (z.B. Kanalfilter und/oder Matched-Filter) und (feine) Zeit- und Frequenz-Synchronisation. Beispielsweise kann der Decoder 124 ausgebildet sein, um für die Decodierung der detektierten Teil-Datenpakete jeweils ein geeignetes Teilbandsignal der $N_{IM}$ Teilbandsignale 174 auszuwählen und um die detektierten Teil-Datenpakete 142 aus den jeweiligen Teilbandsignalen zu extrahieren. Beispielsweise kann der Decoder 124 unter Verwendung der jeweiligen Detektionsparameter (z.B. Detektionszeitpunkte und/oder Detektionsfrequenzen) geeignete (Zeit-)Abschnitte geeigneter Teilbandsignale für die Decodierung der jeweiligen detektierten Teil-Datenpakete auswählen und die jeweiligen detektierten Teil-Datenpakete aus den ausgewählten Teilbandsignalen extrahieren, beispielsweise durch Filterung (z.B. Kanalfilter und/oder Matched Filter) und (feine) Zeit- und Frequenz- Synchronisation.

Hierzu kann der Decoder 124 beispielsweise eine Mehrzahl von Extrahierern 180 und Filtern (z.B. Kanalfilter und/oder Matched-Filter) 183 aufweisen.

Das in Fig. 12 gezeigte Ausführungsbeispiel des Datenempfängers 110 beruht auf einer Vorzerlegung des Breitbandsignals 120. Dadurch kann ein Kompromiss zwischen dem Rechenaufwand bei massiv parallelem Empfang und dem Speicherbedarf erzielt werden.

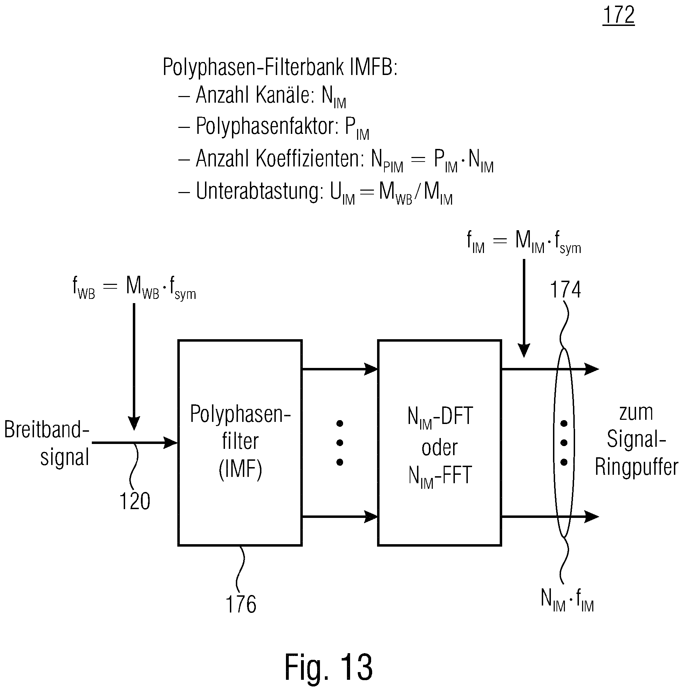

Das Breitbandsignal 120 kann mit einer zusätzlichen Polyphasen-Filterbank (IMFB) 172 in überlappende Teilbänder vorzerlegt werden, wie dies in Fig. 13 gezeigt ist.

Im Detail zeigt Fig. 13 ein schematisches Blockschaltbild der zweiten Filterbank 172, gemäß einem Ausführungsbeispiel. Wie in Fig. 13 zu erkennen ist, kann die zweite Filterbank 172 ausgebildet sein, um das Breitbandsignal 120 durch eine Polyphasenfilterung und eine N-Punkt-DFT oder N-Punkt-FFT in die Mehrzahl von Teilbandsignalen 174 aufzuteilen.

Dabei kann die Abtastrate auf die Vorzerlegungsrate $f_{IM}$ reduziert werden. Der zugehörige Unterabtastfaktor beträgt:

$$U_{IM} = f_{WB} / f_{IM} = M_{WB} / M_{IM}$$

Mit Bezug auf die Abtastrate $f_{SYNC}$ im Decoder 124 sind drei Fälle zu unterscheiden:

    1. $f_{IM} > F_{SYNC}$: Unterabtastung in der Filterung (CF+MF) 183 erforderlich
    2. $f_{IM} < F_{SYNC}$: Überabtastung in der Filterung (CF+MF) 183 erforderlich
    3. $f_{IM} = F_{SYNC}$: keine Änderung der Abtastrate erforderlich

Bezüglich des Rechenaufwands in der Vorzerlegung ist der Fall 1 am günstigsten und der Fall 2 am ungünstigsten. Bezüglich des Rechenaufwands im Paket-Decoder 124 liegen die Verhältnisse genau umgekehrt. Bezüglich des Speicherbedarfs ist keine Präferenz vorhanden, da bei einer Reduktion der Abtastrate $f_{IM}$ die Anzahl $N_{IM}$ der Kanäle erhöht werden muss.

Auch bei einer Vorzerlegung nimmt der Datenstrom zu, da die Summe der Bandbreite der Teilbänder bei einer (z.B. erforderlichen) Überlappung größer ist als die Bandbreite des Breitbandsignals 120. Der Faktor der Zunahme beträgt:

$$K_{IM} = N_{IM} \cdot f_{IM} / f_{WB} = N_{IM} \cdot M_{IM} / M_{WB}$$

Dieser Faktor nimmt in der Praxis jedoch maximal den Wert 2 an, d.h. der Summen-Datenstrom der Teilbandsignale 174 beträgt maximal das Doppelte des Datenstroms des Breitbandsignals 120.

Das Polyphasenfilter (IMF) der Polyphasen-Filterbank (IMFB) 172 kann zwei Bedingungen erfüllen:

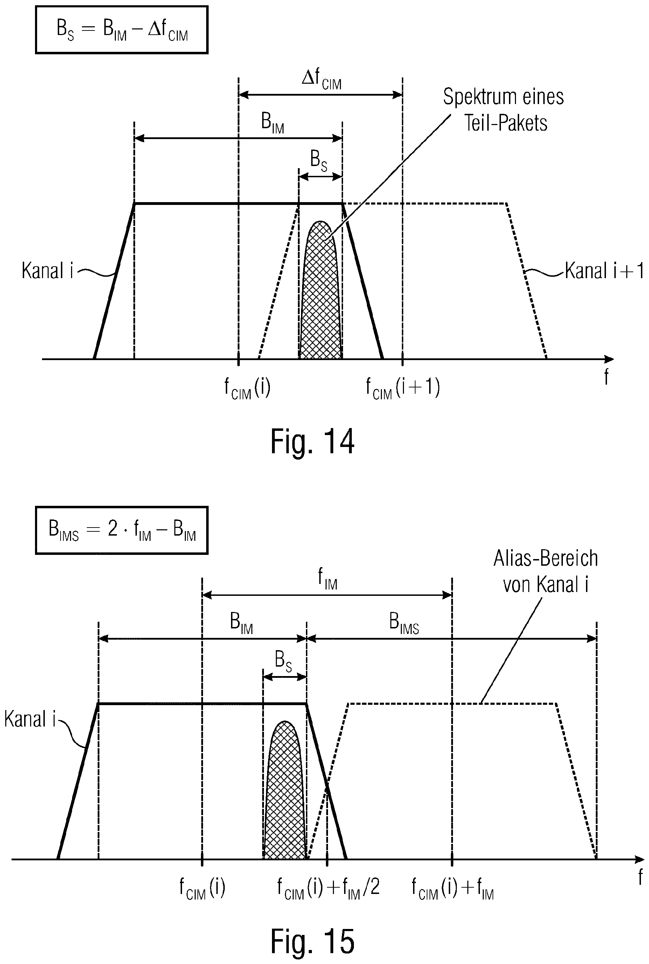

    • Die Durchlassbereiche benachbarter Filterkanäle können sich mindestens um die Bandbreite Bs eines Teil-Pakets 142 überlappen, damit ein Teil-Paket 142 in diesem Bereich ohne nennenswerte Verzerrungen entweder dem einen oder dem anderen Filterkanal entnommen werden kann, siehe Fig. 14 Beim Filterentwurf kann der zur Verfügung stehende Spielraum voll ausgenutzt werden: $B_S = B_{IM} - \Delta f_{CIM}$.

- Die Summe aus der Bandbreite $B_{IM}$ des Durchlassbereichs und der Sperrbandbreite $B_{IMS}$ kann den Wert $2 \cdot f_{IM}$ nicht überschreiten, damit der Überlappungsbereich frei von Alias-Produkten bleibt, siehe Fig. 15. Auch hier kann der zur Verfügung stehende Spielraum beim Filterentwurf voll ausgenutzt werden: $B_{IM} + B_{IMS} = 2 \cdot f_{IM}$.

Es können folgende Zusammenhänge gelten:

- Bandbreite eines Teil-Pakets: $B_S = b_S \cdot f_{sym}$ mit $b_S = 1...2$
- Bandbreite des Durchlassbereichs: $B_{IM} = b_{IM} \cdot f_{IM}$ mit $b_{IM} < 1$
- Kanalabstand: $\Delta f_{CIM} = f_{WB} / N_{IM}$

Daraus folgt mit $f_{IM} = M_{IM} \cdot f_{sym}$ und $f_{WB} = M_{WB} \cdot f_{sym}$ die Bedingung:

$$N_{IM} > M_{WB} / (M_{IM} - b_S)$$

Die Werte für bs und $M_{WB}$ sind vorgegeben. Aus den Wertepaaren $(M_{IM}, N_{IM})$, die die Bedingung erfüllen, wird das Wertepaar ausgewählt, für das der Rechenaufwand bei massiv parallelem Empfang mit der maximal zu erwartenden Paketrate minimal wird. Dazu kann für jedes Wertepaar $(M_{IM}, N_{IM})$ das zugehörige Polyphasenfilter (IMF) mit einer normierten Bandbreite

$$B_{IM} / f_{WB} = b_S / M_{WB} + 1 / N_{IM}$$

des Durchlassbereichs und einer normierten Sperrbandbreite

$$B_{IMS} / f_{WB} = (2 \cdot M_{IM} - b_S) / M_{WB} - 1 / N_{IM}$$

entworfen werden. Die zur Erzielung einer ausreichend hohen Sperrdämpfung erforderliche Koeffizienten-Anzahl $N_{PIM}$ ist in der Regel deutlich größer als die Kanalanzahl $N_{IM}$. Der erforderliche Polyphasenfaktor

$$P_{IM} = N_{PIM} / N_{IM}$$

liegt beispielsweise (z.B. in der Regel) im Bereich 6...10.

Für das als Beispiel betrachtete System 1 gilt $M_{WB} = 96$ und $M_{SYNC} = 12$. Für die Bandbreite der Teil-Pakete gelte bs = 2. Daraus ergibt sich die Bedingung:

$$N_{IM} > 96 / (M_{IM} - 2)$$

Um den Fall 3 zu erhalten, bei dem im Decoder 124 keine Änderung der Abtastrate erforderlich ist, muss $M_{IM}$ = $M_{SYNC}$ = 12 gelten. Daraus folgt für die Anzahl der Kanäle: $N_{IM} > 9,6$. Demnach könnte theoretisch eine DFT der Länge $N_{IM}$ = 10 verwendet werden. Dabei liegt der Faktor $b_{IM}$ jedoch sehr nahe bei Eins, so dass das Polyphasenfilter (IMF) eine sehr hohe Anzahl an Koeffizienten aufweisen muss. Ein guter Kompromiss wird in diesem Fall mit einer FFT der Länge $N_{IM}$ = 16 erzielt. In diesem Fall erhält man für die normierten Bandbreiten des Filters die Werte:

$$B_{IM} / f_{WB} = 2 / 96 + 1 / 16 = 0,0833$$

$$B_{IMS} / f_{WB} = (2 \cdot 12 - 2) / 96 - 1 / 16 = 0,1667$$

Ein entsprechender Filterentwurf mit einer Sperrdämpfung über 80 dB führt auf ein Filter mit $N_{PIM}$ = 96 Koeffizienten. Der Polyphasenfaktor beträgt $P_{IM}$ = 6. Der Datenstrom nimmt um den Faktor

$$K_{IM} = N_{IM} \cdot M_{IM} / M_{WB} = 16 \cdot 12 / 96 = 2$$

zu. Hinsichtlich des Rechenaufwands im Decoder wäre ein geringerer Wert für $M_{IM}$ anzustreben, z.B. $M_{IM}$ = 6. Dies erfordert $N_{IM}$ > 24. In diesem Fall wäre eine FFT der Länge $N_{IM}$ = 32 günstig. Ob dadurch der insgesamt benötigte Rechenaufwand bei der maximal zu erwartenden Paketrate verringert werden kann, muss experimentell ermittelt werden.

Generell gilt, dass der optimale Wert für $M_{IM}$ mit zunehmender Paketrate abnimmt. Dabei bewirkt der Term - $b_S$ im Nenner der oben genannten Bedingung, dass die Anzahl $N_{IM}$ der Kanäle bei Annäherung von $M_{IM}$ an bs stark zunimmt. In diesem Bereich steigt dann auch der Datenstrom stärker an. Die Anordnungen in Fig. 10 und Fig. 11 sind als Grenzfälle zu betrachten:

- Das in Fig. 10 gezeigte Ausführungsbeispiel des Datenempfängers 110 ist für sehr geringe Paketraten optimal. In diesem Fall kann der zusätzliche Rechenaufwand für die Vorzerlegung nicht durch einen verringerten Rechenaufwand im Paket-Decoder 124 kompensiert werden.
- Das in Fig. 11 gezeigte Ausführungsbeispiel des Datenempfängers 110 ist bezüglich des Rechenaufwands für sehr hohe Paketraten optimal. Es entspricht dem Grenzfall einer maximalen Vorzerlegung, bei der die Teilbänder der Vorzerlegung jeweils einen Empfangskanal bilden und die drei beteiligten Filter - das Filter in der Vorzerlegung (IMF), das Kanal (CF) und das Matched Filter (MF) zu einem Filter zusammenfallen. Der Datenstrom nimmt dabei jedoch stark zu.

Die Extraktion der Signalabschnitte der Teil-Pakete 124 aus den Teilbändern kann in vier Schritten erfolgen, siehe Fig. 12:

1. Bestimmung des Teilbandes, in dem der Signalabschnitt liegt (SEL)
2. Entnahme des Signalabschnitts aus dem Signal des Teilbandes (SW)
3. Mischung des Signalabschnitts auf Frequenzlage Null (M)
4. Schnelle Faltung (*Fast Convolution*) des Signalabschnitts mit dem Filter (CF+MF)

Die schnelle Faltung kann aufgrund der Kürze der Signalabschnitte in der Regel in einem Block erfolgen. Sie umfasst die folgenden drei Schritte:

1. Transformation des Signalabschnitts mittels FFT in den Frequenzbereich
2. Multiplikation mit der Frequenzbereichsdarstellung des Filters (CF+MF)
3. Rücktransformation mittels IFFT in den Zeitbereich

In Fällen mit $f_{IM} \neq f_{SYNC}$ bzw. $M_{IM} \neq M_{SYNC}$ erfolgt die erforderliche Unter- bzw. Überabtastung durch eine Verkürzung bzw. Erweiterung (*zero stuffing*) des transformierten Abschnitts im Frequenzbereich. Die IFFT ist in diesem Fall kürzer bzw. länger als die FFT.

## 3. Weitere Ausführungsbeispiele

### 3.1 Getrennte Verarbeitung von Detektor und Decoder

Im Allgemeinen bestimmt in einem Empfänger der Detektor die notwendige Rechenleistung des Systems. Wird im Detektor ein Telegramm detektiert, muss es weiter verarbeitet werden, um die (mutmaßlich) übertragenen Daten zu extrahieren. Damit das System die "zusätzlichen" Detektionen verarbeiten kann, muss hierfür eine Abschätzung getroffen werden, wie viele Telegramme im Mittel etwa an der Basisstation eintreffen. Diese Telegramme müssen mit in die Berechnung der notwendigen Rechenleistung einbezogen werden.

Typischerweise werden diese Detektionen direkt nach der Detektion im gleichen Prozess verarbeitet. Dies bietet den Vorteil, dass die für die Verarbeitung notwendige Daten nicht zwischengespeichert werden müssen. Bei massiv parallelem Empfang von Telegrammen ist dieser Ansatz jedoch nicht umsetzbar, da die Rechenleistung des Detektors durch die zusätzliche Verarbeitung der Telegramme nicht mehr ausreichend ist.

Eine Lösung hierfür stellt die getrennte Verarbeitung von Detektor und Decoder dar (siehe Fig. 3). Der Detektor 122 gibt bei erfolgreicher Detektion die Detektionsparameter 126 an der Decoder 124 weiter, welcher sich um die folgende Verarbeitung kümmert. Hierdurch bleibt die Rechenleistung des Detektors 122 (nahezu) konstant und ist leichter abschätzbar.

Der Decoder 124 kann bei Systemen mit mehreren Rechenkernen (CPU) auf einem/mehreren weiteren Kern(en) verarbeitet werden oder auch auf verschiedenen Prozessoren. Die Berechnung der Rechenleistung des Decoders 124 erfolgt analog wie bei einem System mit kombiniertem Detektor/Decoder.

Weiterhin ist es ebenfalls möglich, den Detektor 122 und den Decoder 124 auf unterschiedlichen Signalverarbeitungseinheiten, die über eine Datenschnittstelle miteinander verbunden sind, zu betreiben. (z. B. Detektor im FPGA, Decoder im DSP oder GPP)

Optional kann für jedes detektierte Telegramm ein eigener Decoder-Prozess gestartet werden. Dieser Prozess wartet so lange, bis die notwendigen Daten zur Decodierung zur Verfügung stehen. Ebenfalls kann er nach dem Empfang von einem Teil der Daten bereits einen ersten Decodierversuch starten und sich, falls dieser erfolgreich sein sollte, wieder beenden. Die weiteren Daten müssen somit nicht mehr decodiert werden. Falls der Versuch nicht erfolgreich ist, kann der Decoder auf weitere Daten warten und später einen weiteren Decodierversuch starten.

Weiterhin vorteilhaft in dieser Art der Verarbeitung ist die Möglichkeit der parallelen Abarbeitung der einzelnen Detektionen. So kann ein kurzes Telegramm, welches später detektiert wurde, früher abgearbeitet werden als ein Telegramm, welches noch weitere Daten benötigt. Hierdurch kann die maximale Gedächtnislänge des Systems reduziert werden, da die Latenz des Systems minimiert wird.

Ein weiterer Vorteil dieser Methodik liegt darin, dass bei einer (kurzzeitigen) zu hohen Zahl an detektierten Telegrammen relativ einfach einzelne detektierte Telegramme verworfen werden können, ohne den Detektor aussetzen zu müssen. Hierdurch sind die nachfolgenden Telegramme von der (kurzzeitigen) Überlastung nicht betroffen. Die Auswahl, welche detektierten Telegramme verworfen werden, kann mit Hilfe eines Überlauf-Puffers oder anhand der Detektionsparameter (Zeitpunkt, Frequenzoffset, SNR) getroffen werden.

Bei Ausführungsbeispielen können der Detektor 122 und der Decoder 124 in unterschiedlichen Modulen laufen. Bei Multi Core-Systemen kann der Detektor 122 in einem anderen Thread als der Decoder 124 laufen, bei Multi-Prozessor Systemen auf einem anderen Prozessor. Zwischen Detektor 122 und Decoder 124 werden nur die Detektionsparameter 126 ausgetauscht.

Bei Ausführungsbeispielen können die Detektionszeitpunkte vom Paket-Detektor 122 in einer "Datenbank" abgelegt und vom Paket-Decoder 124 aus dieser Datenbank entnommen werden, um eine Dekodierung durchzuführen. Bei einer (kurzzeitigen) Überlastung des Systems können einzelne detektierte Telegramme nicht sofort verarbeitet werden, sie werden erst nach und nach der Datenbank zum Abarbeiten entnommen.

### 3.1.1 Datenspeicher zwischen Detektor und Decoder

### 3.1.1.1 Signal-Ringspeicher für das Breitbandsignal

Gemäß Kapitel 2.4 wird ein Signal-Ringspeicher 170 verwendet, welcher das Breitbandsignal 120 direkt, d.h. ohne Aufteilung in Teilbänder, zwischenspeichert. Der Decoder 124 greift bei einem detektierten Telegramm direkt auf das Breitbandsignal zu und extrahiert das notwendige Telegramm.

Dieser Ansatz ist speichertechnisch die beste Lösung, da der Ringspeicher 170 nur das Datenvolumen des Breitbandsignals 120 speichert. Im Gegensatz dazu nimmt das Datenvolumen durch eine Aufteilung des Breitbandsignals in Teilbänder zu.

Bei Ausführungsbeispielen kann der Datenspeicher 170 zwischen Detektor 122 und Decoder 124 das Breitbandsignal 120 ohne spezifische weitere Verarbeitung enthalten.

Bei Ausführungsbeispielen kann der Decoder 124 die Symbole aus dem Breitbandsignal 120 mittels eines DDCs (engl. digital down converter) extrahieren.

### 3.1.1.2 Signal-Ringspeicher für Teilband-Signale

Anstelle der Speicherung des Breitbandsignals 120 können wie in Kapitel 2.4 auch die Teilband-Signale 164 der Filterbank 162 gespeichert werden. Dies hat den Vorteil, dass der Decoder 124 die Teilband-Signale 164 direkt verarbeiten kann und deshalb kein DDC mehr benötigt wird. Dadurch entfällt der Rechenaufwand für den DDC. Nachteilig ist der erhöhte Speicherbedarf aufgrund des höheren Datenvolumens.

Falls der Überabtastfaktor $M_{SYNC}$ im Decoder 124 höher ist als der Überabtastfaktor $M_{DET}$ im Detektor 122, kann vor dem Decoder 124 eine Überabtastung um den Faktor $M_{SYNC}$ / $M_{DET}$ durchgeführt werden, z.B. mit einem Interpolator.

Anstelle der vollständigen Speicherung der Teilband-Signale 164 des Detektors 122 kann auch nur jedes zweite, dritte, vierte Teilband-Signal in den Datenspeicher 170 abgelegt werden. Beispielsweise kann der Frequenzabstand zwischen zwei benachbarten Teilbändern wird durch den zulässigen Fehler im Korrelator des Detektors bestimmt werden. Für die Verarbeitung im Decoder kann ein geringerer Frequenzabstand ausreichend sein, so dass nicht alle Teilbänder im Decoder benötigt werden, sondern nur jedes Zweite, Dritte, usw.

Optional kann dies auch in Zeitrichtung geschehen, so dass nur jeder zweite, dritte, vierte Abtastwert der relevanten Teilband-Signale gespeichert wird. Hierdurch reduziert sich der Speicherbedarf. Beispielsweise kann die Abtastrate $F_{DET}$ im Detektor wird ebenfalls durch den zulässigen Fehler im Korrelator bestimmt. Es kann der Fall eintreten, dass $F_{DET}$ so hoch ist, dass für die Übergabe an den Decoder eine reduzierte Abtastrate ausreichend ist.

Bei Ausführungsbeispielen kann der Datenspeicher 170 zwischen Detektor 122 und Decoder 124 Signale enthalten, welche der Detektionsfilterbank 162 entnommen wurden.

Bei Ausführungsbeispielen kann im Signal-Ringspeicher nur jedes zweite, dritte, vierte Teilband-Signal und/oder nur jeder zweite, dritte, vierte Abtastwert der Teilband-Signale gespeichert werden, um den Speicherbedarf zu reduzieren.

Bei Ausführungsbeispielen kann der Decoder 124 für die Decodierung die Symbole oder einen Teil der Symbole (nur jede zweite, dritte, ... Linie der FFT) aus der Filterbank entnehmen, wie der Detektor.

Bei Ausführungsbeispielen kann es sich bei den Teilband-Signalen um die Ausgangssignale der DFT/FFT der Filterbank handeln.

### 3.1.1.3 Getrennte Filterbänke für Decoder und Detektor

Dieser Ansatz ist beispielhaft in Kapitel 2.5 beschrieben. Er stellt das Optimum aus notwendiger Rechenleistung und Speicherbedarf dar.

Das System ist dabei gekennzeichnet durch:

- eine erste Polyphasen-Filterbank (CMFB) 162 oder andere Bandzerlegung zur Bereitstellung der Teilband-Signale 164 für den Paket-Detektor 122,
- eine zweite Polyphasen-Filterbank (IMFB) 172 oder andere Bandzerlegung zur Vorzerlegung des Eingangssignals in Teilband-Signale 174 zur Minimierung des Rechenaufwands im Paket-Decoder 124,
- optional eine Filterung der Signalabschnitte der Teil-Pakete 142 mittels schneller Faltung (*Fast Convolution*) in einem Block inklusive einer eventuell erforderlichen Unter- bzw. Überabtastung.

Bei Ausführungsbeispielen kann der Decoder mit Hilfe der Detektionsparameter den benötigten Signalausschnitt aus dem zugehörigen Teilband-Signal extrahieren.

### 3.1.2 Synchronisation bei getrennter Verarbeitung von Detektor und Decoder

Typischerweise laufen Detektor und Decoder in der Verarbeitung hintereinander ab.

Der Detektor übernimmt die Aufgabe der Detektion der Telegramme und der Decoder die Aufgabe der Synchronisation der Telegramme.

Dies führt zu der Einschränkung, dass zeitlich parallel nur ein Telegramm detektiert werden kann. Bei Systemen mit verhältnismäßig hohen Frequenzoffsets im Vergleich zur Datenrate (z.B. durch Quarztoleranzen oder systematischen Offsets) ist es jedoch möglich, dass auf mehreren Frequenzen Telegramme parallel übertragen werden.

Damit diese parallele Detektion erfolgen kann, kann die Detektion mehrere Frequenzhypothesen untersuchen.

### 3.1.2.1 Synchronisation im Detektor

Die Untersuchung mehrerer Frequenzhypothesen und Auswahl derjenigen über dem Schwellwert entspricht einer Frequenzsynchronisation. In ähnlicher Weise entspricht die Detektion in Zeitrichtung einer Zeitsynchronisation.

Typischerweise sind die Überabtastungen in Zeit- und Frequenzrichtung im Detektor 122 geringer als diejenigen im anschließenden Decoder 124. Diese kann für die kombinierte Detektion und Synchronisation erhöht werden und/oder mit Hilfe der Nachbarkanäle/Nachbarzeitpunkte eine Interpolation durchgeführt werden, um die Auflösung der Synchronisation zu erhöhen.

Bei Ausführungsbeispielen kann der Detektor um die Fähigkeit der Synchronisation erweitert werden.

Bei Ausführungsbeispielen kann bei einer erfolgten Detektion zunächst der Frequenz- und der Zeitoffset bestimmt werden, bevor das Telegramm dem Decoder übergeben wird.

### 3.1.2.2 Zweistufige Synchronisation im Detektor und Decoder

Die im vorherigen Kapitel beschriebene Methode besitzt den Nachteil, dass in der Regel eine feinere Auflösung der Detektion in Frequenz- und Zeitrichtung notwendig ist und hierdurch mehr Rechenleistung im Detektor benötigt wird.

Um dieses Problem zu umgehen und trotzdem weiterhin eine parallele Detektion auf mehreren Frequenzen durchführen zu können, bietet sich eine zweigeteilte Synchronisation an, wie dies in Fig. 9 gezeigt ist.

Hierbei wird die Detektion mit den benötigten Auflösungen in Zeit- und Frequenzrichtung durchgeführt (Grob-Synchronisation $t_{PKT,C}$ / $f_{PKT,C}$). Erfolgt eine Detektion, wird der Zeitpunkt und die Frequenz mit der gewählten Auflösung an den Decoder 124 übergeben. Dieser nutzt diese beiden Parameter und führt die Synchronisation nur noch innerhalb der verbleibenden Genauigkeiten durch (Fein-Synchronisation $t_{PKT,F}$ / $f_{PKT,F}$).

Ein weiterer Vorteil dieser Methode besteht darin, dass der Decoder 124 durch die grobe Synchronisation weniger Zeit- und Frequenzhypothesen testen muss und somit die benötigte Rechenleistung niedriger ist.

Bei Ausführungsbeispielen kann der Detektor 122 dem Decoder 124 einen groben Zeit- und Frequenzoffset (Detektionsparameter) zur Verfügung stellen.

Bei Ausführungsbeispielen kann der Decoder 124 die Fein-Synchronisation auf Basis der Genauigkeit der groben Synchronisation des Detektors 122 berechnen. Der grobe Frequenzversatz $f_{PKT,C}$, der bei der Synchronisation im Detektor 122 gewonnen wird, wird vor der Fein-Synchronisation kompensiert.

### 3.1.3 Unterschiedliche Filter für die Detektor- und Decoder-Filterbank

Durch die Verwendung von zwei getrennten Filterbänken oder bei der direkten Speicherung des Breitbandsignals im Ringpuffer besteht die Möglichkeit, verschiedene Filtercharakteristiken einzusetzen.

So kann anstelle des Matched-Filters (MF) bei der Detektion eine Annäherung verwendet werden, welche eine bessere Sperrdämpfung aufweist und somit bei Multikanalempfang die Selektion der einzelnen Übertragungen verbessert.

Im Decoder 124 kann es von Vorteil sein, eine Filtercharakteristik einzusetzen, die die Synchronisationseigenschaften verbessert (bei MSK z.B. RC bzw. RRC-Filter anstelle des MF).

Bei Ausführungsbeispielen können in den Filtern bzw. Filterbänken unterschiedliche Filtercharakteristiken eingesetzt werden, die die Funktionalität des Detektors/Decoders verbessern.

Bei Ausführungsbeispielen kann eine Filterbank IMFB eingesetzt werden, die eine FFT oder eine DFT verwendet.

Bei Ausführungsbeispielen können auch andere Verfahren zur Zerlegung des Breitbandsignals in Teilbänder verwendet werden, z.B. Verfahren, die keine FFT oder DFT verwenden.

### 4. Weitere Ausführungsbeispiele

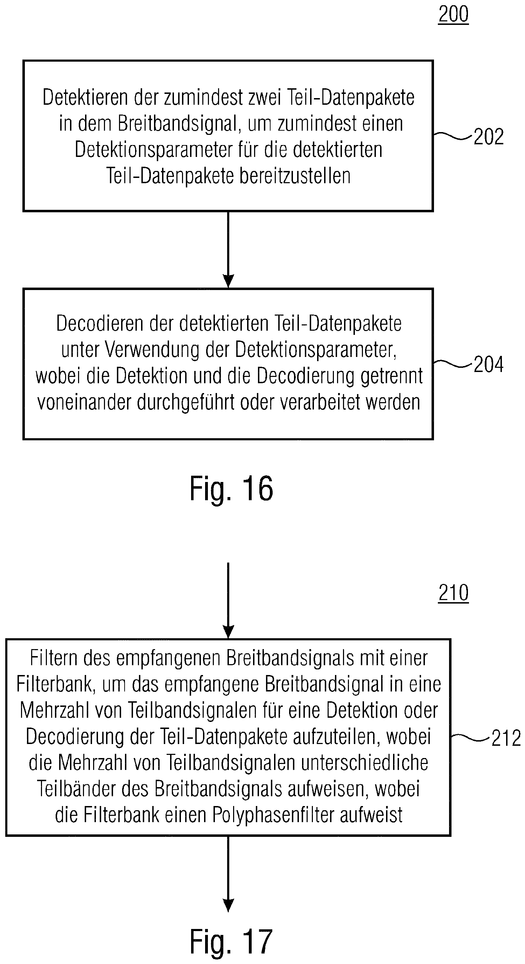

Fig. 16 zeigt ein Flussdiagramm eines Verfahrens 200 zum empfangen eines Breitbandsignals, wobei das Breitbandsignal zumindest zwei Teil-Datenpakete aufweist, die über verschiedene Frequenzen [z.B. Frequenzkanäle] verteilt sind. Das Verfahren 200 umfasst einen Schritt 202 des Detektierens der zumindest zwei Teil-Datenpakete in dem Breitbandsignal, um zumindest einen Detektionsparameter für die detektierten Teil-Datenpakete bereitzustellen. Ferner umfasst das Verfahren 200 einen Schritt 204 des Decodierens der detektierten Teil-Datenpakete unter Verwendung der Detektionsparameter, wobei die Detektion und die Decodierung getrennt voneinander durchgeführt oder verarbeitet werden.

Fig. 17 zeigt ein Flussdiagramm eines Verfahrens 210 zum Empfangen eines Breitbandsignals, wobei das Breitbandsignal zumindest zwei Teil-Datenpakete aufweist, die über verschiedene Frequenzen [z.B. Frequenzkanäle] verteilt sind. Das Verfahren 210 umfasst einen Schritt 212 des Filterns des empfangenen Breitbandsignals mit einer Filterbank, um das empfangene Breitbandsignal in eine Mehrzahl von Teilbandsignalen für eine [z.B. nachfolgende] Detektion oder Decodierung der Teil-Datenpakete aufzuteilen, wobei die Mehrzahl von Teilbandsignalen unterschiedliche [z.B. sich teilweise überlappende] Teilbänder des Breitbandsignals aufweisen, wobei die Filterbank einen Polyphasenfilter aufweist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

**1.** Datenempfänger (110),

wobei der Datenempfänger (110) ausgebildet ist, um ein Breitbandsignal (120) zu empfangen, wobei das Breitbandsignal zumindest zwei Teil-Datenpakete (142) aufweist, die in der Zeit und/oder Frequenz verteilt sind, wobei der Datenempfänger (110) eine erste Filterbank (162) aufweist, die ausgebildet ist, um das empfangene Breitbandsignal in eine Mehrzahl von Teilbandsignalen (164) mit einer Abtastrate $f_{Det}$ für eine Detektion der Teil-Datenpakete (142) aufzuteilen, wobei die Mehrzahl von Teilbandsignalen (164) unterschiedliche Teilbänder des Breitbandsignals (120) aufweisen, wobei die erste Filterbank (162) einen Polyphasenfilter aufweist; wobei der Datenempfänger (110) einen Detektor (122) aufweist, der ausgebildet ist, um die zumindest zwei Teil-Datenpakete (142) in den unterschiedlichen Teilbändern der Mehrzahl von Teilbandsignalen (164) der ersten Filterbank (162) zu detektieren, um Detektionsparameter (126) für die detektierten Teil-Datenpakete bereitzustellen, wobei der Datenempfänger (110) eine zweite Filterbank (172) aufweist, die ausgebildet ist, um das empfangene Breitbandsignal (120) in eine Mehrzahl von Teilbandsignalen mit einer Abtastrate $f_{IM}$ für die Decodierung der Teil-Datenpakete (142) aufzuteilen, wobei die Mehrzahl von Teilbandsignalen (174) unterschiedliche Teilbänder des Breitbandsignals (120) aufweisen, wobei die zweite Filterbank (172) einen Polyphasenfilter aufweist, wobei der Datenempfänger (110) einen Decoder (124) aufweist, der ausgebildet ist, um detektierte Teil-Datenpakete (142) unter Verwendung der von dem Detektor (122) bereitgestellten Detektionsparameter (126) aus den jeweiligen Teilbandsignalen (174) der zweiten Filterbank zu extrahieren, wobei die Abtastrate $f_{IM}$ der von der zweiten Filterbank (172) bereitgestellten Mehrzahl von Teilbandsignalen (174) für die Decodierung der Teil-Datenpakete (142) größer ist als die Abtastrate $f_{DET}$ der von der ersten Filterbank (162) bereitgestellten Mehrzahl von Teilbandsignalen (164) für die Detektion der Teil-Datenpakete (142) und wobei die Anzahl an Teilbandsignalen $N_{IM}$ der von der zweiten Filterbank (172) bereitgestellten Teilbandsignale (174) für die Decodierung der Teil-Datenpakete (142) geringer ist als die Anzahl an Teilbandsignalen N der von der ersten Filterbank (162) bereitgestellten Teilbandsignale (164) für die Detektion der Teil-Datenpakete (142).

2. Datenempfänger (110) nach dem vorangehenden Anspruch,
wobei die erste Filterbank (162) eine N-Punkt-DFT oder N-Punkt-FFT aufweist.

3. Datenempfänger (110) nach einem der vorangehenden Ansprüche,
wobei die erste Filterbank (162) einen N-Kanal-Mischer aufweist.

4. Datenempfänger (110) nach einem der vorangehenden Ansprüche,
wobei die erste Filterbank (162) ausgebildet ist, um eine Unterabtastung des empfangenen Breitbandsignals (120) durchzuführen, so dass eine Abtastrate der Mehrzahl von Teilbandsignalen (164) geringer ist als eine Abtastrate des empfangenen Breitbandsignals (120).

5. Datenempfänger (110) nach einem der vorangehenden Ansprüche,
wobei die zweite Filterbank (172) eine N-Punkt-DFT oder N-Punkt-FFT aufweist.

6. Datenempfänger (110) nach einem der vorangehenden Ansprüche,
wobei die zweite Filterbank (172) ausgebildet ist, um eine Unterabtastung des empfangenen Breitbandsignals (120) durchzuführen, so dass eine Abtastrate der Mehrzahl von Teilbandsignalen (174) geringer ist als eine Abtastrate des empfangenen Breitbandsignals (120).

7. Datenempfänger (110) nach einem der der vorangehenden Ansprüche,

wobei die zweite Filterbank (172) ausgebildet ist, um das Breitbandsignal (120) in eine Mehrzahl von Teilbandsignalen (174) mit sich überlappenden Teilbändern aufzuteilen,
wobei sich die Teilbänder zumindest um eine Bandbreite eines der Teil-Datenpakete (142) überlappen.

8. Datenempfänger (110) nach einem der der vorangehenden Ansprüche,
wobei die zweite Filterbank (172) ausgebildet ist, um das Breitbandsignal (120) in eine Mehrzahl von Teilbandsignalen (174) mit sich überlappenden Teilbändern aufzuteilen, wobei bei der Aufteilung des Breitbandsignals eine Summe aus einer Bandbreite eines Durchlassbereichs für eines der Teilbandsignale und aus einer Sperrbandbreite eines des Teilbandsignals benachbarten Teilbandsignals nicht größer ist als eine doppelte Abtastrate der Mehrzahl von Teilbandsignalen ist.

**9.** Datenempfänger (110) nach einem der der vorangehenden Ansprüche,
wobei die erste Filterbank (162) und die zweite Filterbank (172) unterschiedliche Filtercharakteristiken aufweisen.

**10.** Verfahren (210) zum Empfangen eines Breitbandsignals, wobei das Breitbandsignal zumindest zwei Teil-Datenpakete aufweist, die über verschiedene Frequenzen verteilt sind, aufweisend

Filtern (212) des empfangenen Breitbandsignals mit einer ersten Filterbank, um das empfangene Breitbandsignal in eine Mehrzahl von Teilbandsignalen mit einer Abtastrate $f_{Det}$ für eine Detektion der Teil-Datenpakete aufzuteilen, wobei die Mehrzahl von Teilbandsignalen unterschiedliche Teilbänder des Breitbandsignals aufweisen,
wobei die erste Filterbank einen Polyphasenfilter aufweist,
Detektieren der zumindest zwei Teil-Datenpakete in den unterschiedlichen Teilbändern der Mehrzahl von Teilbandsignalen der ersten Filterbank, um Detektionsparameter für die detektierten Teil-Datenpakete bereitzustellen,
Filtern des empfangenen Breitbandsignals mit einer zweiten Filterbank, um das empfangene Breitbandsignal in eine Mehrzahl von Teilbandsignalen mit einer Abtastrate $f_{IM}$ für eine Decodierung der Teil-Datenpakete aufzuteilen, wobei die Mehrzahl von Teilbandsignalen unterschiedliche Teilbänder des Breitbandsignals aufweisen,
wobei die zweite Filterbank einen Polyphasenfilter aufweist,
Extrahieren der detektierten Teil-Datenpakete unter Verwendung der bereitgestellten Detektionsparameter aus den jeweiligen Teilbandsignalen der zweiten Filterbank und Decodieren der extrahierten Teil-Datenpakete,
wobei die Abtastrate $f_{IM}$ der von der zweiten Filterbank bereitgestellten Mehrzahl von Teilbandsignalen für die Decodierung der Teil-Datenpakete größer ist als die Abtastrate $f_{DET}$ der von der ersten Filterbank bereitgestellten Mehrzahl von Teilbandsignalen für die Detektion der Teil-Datenpakete und wobei die Anzahl an Teilbandsignalen $N_{IM}$ der von der zweiten Filterbank bereitgestellten Teilbandsignale für die Decodierung der Teil-Datenpakete geringer ist als die Anzahl an Teilbandsignalen N der von der ersten Filterbank bereitgestellten Teilbandsignale für die Detektion der Teil-Datenpakete.

**11.** Computerprogramm zur Durchführung des Verfahrens nach dem vorangehenden Anspruch, wenn das Computerprogramm auf einem Computer oder Mikroprozessor eines Empfängers abläuft.

**Claims**

**1.** Data receiver (110),

wherein the data receiver (110) is configured to receive a broadband signal (120), wherein the broadband signal comprises at least two partial data packets (142) that are distributed in time and/or frequency,
wherein the data receiver (110) comprises a first filterbank (162) that is configured to divide the received broadband signal into a plurality of subband signals (164) with a sampling rate $f_{Det}$ for detecting the partial data packets (142), wherein the plurality of subband signals (164) comprise different subbands of the broadband signal (120),
wherein the first filterbank (162) comprises a polyphase filter;
wherein the data receiver (110) comprises a detector (122) that is configured to detect the at least two partial data packets (142) in the different subbands of the plurality of subband signals (164) of the first filterbank (126) to provide detection parameters (126) for the detected partial data packets,
wherein the data receiver (110) comprises a second filterbank (172) that is configured to divide the received broadband signal (120) into a plurality of subband signals with a sampling rate $f_{IM}$ for decoding the partial data packets (142), wherein the plurality of subband signals (174) comprise different subbands of the broadband signal (120),
wherein the second filterbank (172) comprises a polyphase filter,
wherein the data receiver (110) comprises a decoder (124) that is configured to extract detected partial data packets (142) from the respective subband signals (174) of the second filterbank by using the detection parameters (126) provided by the detector (122),
wherein the sampling rate $f_{IM}$ of the plurality of subband signals (174) provided by the second filterbank (172) for decoding the partial data packets (142) is greater than the sampling rate $f_{DET}$ of the plurality of subband signals (164) provided by the first filterbank (162) for detecting the partial data packets (142) and wherein the number of subband signals $N_{IM}$ of the subband signals (174) provided by the second filterbank (172) for decoding the partial data packets (142) is lower than the number of subband signals N of the subband signals (164) provided by the first filterbank (162) for detecting the partial data packets (142).

2. Data receiver (110) according to the preceding claim,
   wherein the first filterbank (162) comprises an N point DFT or N point FFT.

3. Data receiver (110) according to one of the preceding claims,
   wherein the first filterbank (162) comprises an N channel mixer.

4. Data receiver (110) according to one of the preceding claims,
   wherein the first filterbank (162) is configured to perform undersampling of the received broadband signal (120) such that a sampling rate of the plurality of subband signals (164) is lower than a sampling rate of the received broadband signal (120).

5. Data receiver (110) according to one of the preceding claims,
   wherein the second filterbank (172) comprises an N point DFT or N point FFT.

6. Data receiver (110) according to one of the preceding claims,
   wherein the second filterbank (172) is configured to perform undersampling of the received broadband signal (120) such that a sampling rate of the plurality of subband signals (174) is lower than a sampling rate of the received broadband signal (120).

7. Data receiver (110) according to one of the preceding claims,

   wherein the second filterbank (172) is configured to divide the broadband signal (120) into a plurality of subband signals (174) with overlapping subbands,
   wherein the subbands overlap by at least one bandwidth of one of the partial data packets (142).

8. Data receiver (110) according to one of the preceding claims,
   wherein the second filterbank (172) is configured to divide the broadband signal (120) into a plurality of subband signals (174) with overlapping subbands, wherein, when dividing the broadband signal, a sum of a bandwidth of a passband for one of the subband signals and of a stop bandwidth of a subband signal adjacent to the subband signal is not greater than twice the sampling rate of the plurality of subband signals.

9. Data receiver (110) according to one of the preceding claims,
   wherein the first filterbank (162) and the second filterbank (172) comprise different filter characteristics.

10. Method (210) for receiving a broadband signal, wherein the broadband signal comprises at least two partial data packets that are distributed across different frequencies, comprising:

    filtering (212) the received broadband signal with a first filterbank to divide the received broadband signal into a plurality of subband signals with a sampling rate $f_{DET}$ for detecting the partial data packets, wherein the plurality of subband signals comprise different subbands of the broadband signal,
    wherein the first filterbank comprises a polyphase filter,
    detecting the at least two partial data packets in the different subbands of the plurality of subband signals of the first filterbank to provide detection parameters for the detected partial data packets,
    filtering the received broadband signal with a second filterbank to divide the received broadband signal into a plurality of subband signals with a sampling rate $f_{IM}$ for decoding the partial data packets, wherein the plurality of subband signals comprise different subbands of the broadband signal,
    wherein the second filterbank comprises a polyphase filter,
    extracting the detected partial data packets from the respective subband signals of the second filterbank by using the provided detection parameters and decoding the extracted partial data packets,
    wherein the sampling rate $f_{IM}$ of the plurality of subband signals provided by the second filterbank for decoding the partial data packets is greater than the sampling rate $f_{DET}$ of the plurality of subband signals provided by the first filterbank for detecting the partial data packets and wherein the number of subband signals $N_{IM}$ of the subband signals provided by the second filterbank for decoding the partial data packets is lower than the number of subband signals N of the subband signals provided by the first filterbank for detecting the partial data packets.

**11.** Computer program for performing the method according to the preceding claim, when the computer program runs on a computer or microprocessor of a receiver.

**Revendications**

**1.** Récepteur de données (110),

dans lequel le récepteur de données (110) est conçu pour recevoir un signal à large bande (120), dans lequel le signal à large bande présente au moins deux paquets de données partiels (142) qui sont répartis dans le temps et/ou en fréquence,

dans lequel le récepteur de données (110) présente un premier banc de filtres (162) qui est conçu pour diviser le signal à large bande reçu en une pluralité de signaux de bande partielle (164) par un taux de balayage $f_{Det}$ pour une détection des paquets de données partiels (142), dans lequel la pluralité de signaux de bande partielle (164) présentent différentes bandes partielles du signal à large bande (120),

dans lequel le premier banc de filtres (162) présente un filtre polyphasé;

dans lequel le récepteur de données (110) présente un détecteur (122) qui est conçu pour détecter les au moins deux paquets de données partiels (142) dans les différentes bandes partielles de la pluralité de signaux de bande partielle (164) du premier banc de filtres (162) pour fournir les paramètres de détection (126) pour les paquets de données partiels détectés, dans lequel le récepteur de données (110) présente un deuxième banc de filtres (172) qui est conçu pour diviser le signal à large bande (120) reçu en une pluralité de signaux de bande partielle par un taux de balayage $f_{IM}$ pour le décodage des paquets de données partiels (142), dans lequel la pluralité de signaux de bande partielle (174) présentent différentes bandes partielles du signal à large bande (120),

dans lequel le deuxième banc de filtres (172) présente un filtre polyphasé,

dans lequel le récepteur de données (110) présente un décodeur (124) qui est conçu pour extraire les paquets de données partiels (142) détectés à l'aide des paramètres de détection (126) fournis par le détecteur (122) des signaux de bande partielle (174) respectifs du deuxième banc de filtres,

dans lequel le taux de balayage $f_{IM}$ de la pluralité de signaux de bande partielle (174) fournis par le deuxième banc de filtres (172) pour le décodage des paquets de données partiels (142) est supérieur au taux de balayage $F_{DET}$ de la pluralité de signaux de bande partielle (164) fournis par le premier banc de filtres (162) pour la détection des paquets de données partiels (142) et dans lequel le nombre de signaux de bande partielle $N_{IM}$ des signaux de bande partielle (174) fournis par le deuxième banc de filtres (172) pour le décodage des paquets de données partiels (142) est inférieur au nombre de signaux de bande partielle N des signaux de bande partielle (164) fournis par le premier banc de filtres (162) pour la détection des paquets de données partiels (142).

**2.** Récepteur de données (110) selon la revendication précédente,
dans lequel le premier banc de filtres (162) présente une DFT à N points ou une FFT à N points.

**3.** Récepteur de données (110) selon l'une des revendications précédentes,
dans lequel le premier banc de filtres (162) présente un mélangeur à N canaux.

**4.** Récepteur de données (110) selon l'une des revendications précédentes,
dans lequel le premier banc de filtres (162) est conçu pour effectuer un sous-balayage du signal à large bande (120) reçu de sorte qu'un taux de balayage de la pluralité de signaux de bande partielle (164) soit inférieur à un taux de balayage du signal à large bande (120) reçu.

**5.** Récepteur de données (110) selon l'une des revendications précédentes,
dans lequel le deuxième banc de filtres (172) présente une DFT à N points ou une FFT à N points.

**6.** Récepteur de données (110) selon l'une des revendications précédentes,
dans lequel le deuxième banc de filtres (172) est conçu pour effectuer un sous-balayage du signal à large bande (120) reçu de sorte qu'un taux de balayage de la pluralité de signaux de bande partielle (174) soit inférieur à un taux de balayage du signal à large bande (120) reçu.

**7.** Récepteur de données (110) selon l'une des revendications précédentes,
dans lequel le deuxième banc de filtres (172) est conçu pour diviser le signal à large bande (120) en une pluralité de signaux de bande partielle (174) avec des bandes partielles venant en chevauchement, dans lequel les bandes partielles viennent en chevauchement au moins d'une largeur de bande de l'un des paquets de données partiels (142).

8. Récepteur de données (110) selon l'une des revendications précédentes, dans lequel le deuxième banc de filtres (172) est conçu pour diviser le signal à large bande (120) en une pluralité de signaux de bande partielle (174) avec des bandes partielles venant en chevauchement, dans lequel, lors de la division du signal à large bande, une somme d'une largeur de bande d'une zone de passage pour l'un des signaux de bande partielle et d'une largeur de bande de blocage d'un signal de bande partielle adjacent au signal de bande partielle n'est pas supérieure à deux fois le taux de balayage de la pluralité de signaux de bande partielle.

9. Récepteur de données (110) selon l'une des revendications précédentes, dans lequel le premier banc de filtres (162) et le deuxième banc de filtres (172) présentent des caractéristiques de filtre différentes.

10. Procédé (210) permettant de recevoir un signal à large bande, dans lequel le signal à large bande présente au moins deux paquets de données partiels qui sont répartis sur différentes fréquences, présentant le fait de

filtrer (212) le signal à large bande reçu par un premier banc de filtres pour diviser le signal à large bande reçu en une pluralité de signaux de bande partielle par un taux de balayage $f_{Det}$ pour une détection des paquets de données partiels, où la pluralité de signaux de bande partielle présentent des bandes partielles différentes du signal à large bande,
dans lequel le premier banc de filtres présente un filtre polyphasé,
détecter les au moins deux paquets de données partiels dans les différentes bandes partielles de la pluralité de signaux de bande partielle du premier banc de filtres pour fournir les paramètres de détection pour les paquets de données partiels détectés,
filtrer le signal à large bande reçu par un deuxième banc de filtres pour diviser le signal à large bande reçu en une pluralité de signaux de bande partielle par un taux de balayage $f_{IM}$ pour un décodage des paquets de données partiels, où la pluralité de signaux de bande partielle présentent des bandes partielles différentes du signal à large bande,
dans lequel le deuxième banc de filtres présente un filtre polyphasé,
extraire les paquets de données partiels détectés à l'aide des paramètres de détection fournis des signaux de bande partielle respectifs du deuxième banc de filtres et décoder les paquets de données partiels extraits,
dans lequel le taux de balayage $f_{IM}$ de la pluralité de signaux de bande partielle fournis par le deuxième banc de filtres pour le décodage des paquets de données partiels est supérieur au taux de balayage $f_{DET}$ de la pluralité de signaux de bande partielle fournis par le premier banc de filtres pour la détection des paquets de données partiels et dans lequel le nombre de signaux de bande partielle $N_{IM}$ des signaux de bande partielle fournis par le deuxième banc de filtres pour le décodage des paquets de données partiels est inférieur au nombre de signaux de bande partielle N des signaux de bande partielle fournis par le premier banc de filtres pour la détection des paquets de données partiels.

11. Programme d'ordinateur pour la mise en oeuvre du procédé selon la revendication précédente lorsque le programme d'ordinateur est exécuté sur un ordinateur ou microprocesseur d'un récepteur.

Fig. 1

Fig. 2

<u>110</u>

122

Breitbandsignal

Paket-
Detektor

120

126 ⟋ detektierte Pakete

Paket-
Decoder

decodierte Pakete (149)

124

Fig. 3

Frequenz

(1)

(2)

Teil-
Pakete

(3)

(4)

Zeit

Fig. 4

Downconverter (DDC): ⌐150
— Mischung
— Filterung
— Unterabtastung

154          156          158          160

120    152

Breitbandsignal → ⊗ → Kanalfilter (CF) → Matched-Filter (MF) → Korrelation (CORR) → Paket-Detektion

Empfangsfrequenz $f_C$

Abtastrate $f_{WB} = M_{WB} \cdot f_{sym}$

Abtastrate $f_{DET} = M_{DET} \cdot f_{sym} \ll f_{WB}$

Fig. 5

EP 3 782 310 B1

N parallele Empfangskanäle:
- Empfangsfrequenzen $f_{C1}, \ldots, f_{CN}$
- Kanalabstand $\Delta f_C = f_{sym}/M_C$
- Anzahl Kanäle $N = M_{WB} \cdot M_C$

$N \cdot f_{DET} = M_C \cdot M_{DET} \cdot f_{WB}$

Breitband-signal

zur Paket-Detektion

Fig. 6

122

Polyphasen-Filterbank CMFB mit Derotation:
 – Anzahl Kanäle: N
 – Polyphasenfaktor: P
 – Anzahl Koeffizienten: $N_P = P \cdot N$
 – Unterabtastung: $U_{DET} = M_{WB}/M_{DET}$

Breitband-signal

$f_{WB}$ → 120

Poly-phasen-filter (CF + MF) — 162

N-DFT oder N-FFT

⊗ — 164

CORR(1) · · · CORR(N) — 158

$f_{DET}$ →

$N \cdot f_{DET} = M_C \cdot M_{DET} \cdot f_{WB}$

zur Paket-Detektion

Fig. 7

170

120

Breitbandsignal

Signal-
Ringspeicher

120'

verzögertes
Breitbandsignal

Fig. 8

EP 3 782 310 B1

Parameter eines detektierten Pakets:
  – Referenz-Zeitpunkt (grob): $t_{PKT,C}$
  – Frequenz (grob): $f_{PKT,C}$

t/f Synchronisation im Decoder:
  – Referenz-Zeitpunkt (fein): $t_{PKT,F}$
  – Frequenz (fein): $f_{PKT,F}$

126

$t_{PKT,C}$     $f_{PKT,C}$

184          186          188          190

verzögertes Breitband-signal

181     182

180

Kanalfilter (CF)

Matched-Filter (MF)

t/f Synchroni-sation

Paket-Decodierung

$f_{WB} = M_{WB} \cdot f_{sym}$

$f_{SYNC} = M_{SYNC} \cdot f_{sym}$

$f_{sym}$

Fig. 9

Fig. 10

EP 3 782 310 B1

Fig. 11

EP 3 782 310 B1

Fig. 12

<u>172</u>

Polyphasen-Filterbank IMFB:
  – Anzahl Kanäle: $N_{IM}$
  – Polyphasenfaktor: $P_{IM}$
  – Anzahl Koeffizienten: $N_{PIM} = P_{IM} \cdot N_{IM}$
  – Unterabtastung: $U_{IM} = M_{WB} / M_{IM}$

$$f_{IM} = M_{IM} \cdot f_{sym}$$

$$f_{WB} = M_{WB} \cdot f_{sym}$$

174

Breitband-signal

Polyphasen-filter (IMF)

$N_{IM}$-DFT oder $N_{IM}$-FFT

zum Signal-Ringpuffer

120

176

$N_{IM} \cdot f_{IM}$

Fig. 13

$$B_S = B_{IM} - \Delta f_{CIM}$$

Fig. 14

$$B_{IMS} = 2 \cdot f_{IM} - B_{IM}$$

Fig. 15

200

Detektieren der zumindest zwei Teil-Datenpakete
in dem Breitbandsignal, um zumindest einen
Detektionsparameter für die detektierten
Teil-Datenpakete bereitzustellen

202

Decodieren der detektierten Teil-Datenpakete
unter Verwendung der Detektionsparameter,
wobei die Detektion und die Decodierung getrennt
voneinander durchgeführt oder verarbeitet werden

204

## Fig. 16

210

Filtern des empfangenen Breitbandsignals mit einer
Filterbank, um das empfangene Breitbandsignal in eine
Mehrzahl von Teilbandsignalen für eine Detektion oder
Decodierung der Teil-Datenpakete aufzuteilen, wobei
die Mehrzahl von Teilbandsignalen unterschiedliche
Teilbänder des Breitbandsignals aufweisen, wobei
die Filterbank einen Polyphasenfilter aufweist

212

## Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011082098 B4
- US 2004213327 A1

- US 20070211785 A1

**In der Beschreibung aufgeführte Nicht-Patentliteratur**

- 11 Polyphase analysis filter bank downconverts unequal channel bandwidths with arbitrary center frequencies 11. **FRED HARRIS et al.** ANALOG INTEGRATED CIRCUITS AND SIGNAL PROCESSING. KLUWER ACADEMIC PUBLISHERS, 22. September 2011, vol. 71, 481-494

- **FREDRIC HARRIS et al.** 11 An Efficient Full Digital Frequency Hopping Demodulator Based on Polyphase Filter Banks 11. *SDRII-WinnComm,* 29. November 2011, 1-5, https://www.wirelessinnovation.org/assets/Proceedings/2011/2011-6a-harris%20chen.pdf